# EUROPÄISCHE PATENTSCHRIFT

(11) **EP 1 108 308 B1**
(45) Veröffentlichungstag und Bekanntmachung des Hinweises auf die Patenterteilung: **02.11.2005**
(21) Anmeldenummer: 99968276.8
(22) Anmeldetag: 23.08.1999
(51) Int. Cl.: H04L 12/22, H04L 9/08

(54) **SYSTEM UND VERFAHREN ZUR ABLAUFKONTROLLE BEI NETZWERK-ANWENDUNGEN**
SYSTEM AND METHOD FOR CONTROLLING THE OPERATIONAL SEQUENCE IN NETWORK APPLICATIONS
SYSTEME ET PROCEDE PERMETTANT DE CONTROLER LE DEROULEMENT D'UNE SESSION DANS LES APPLICATIONS EN RESEAU

(30) Priorität: 28.08.1998 US 143537
(43) Veröffentlichungstag der Anmeldung: 20.06.2001
(73) Patentinhaber: SAP AG, 69190 Walldorf (DE)
(72) Erfinder: WENIG, Robert, Mill Valley, CA 94941 (US); TSYGANSKIY, Igor, Los Gatos, CA 95032 (US)
(74) Vertreter: Jany, Peter
(86) Internationale Anmeldenummer: PCT/EP1999/006143
(87) Internationale Veröffentlichungsnummer: WO 2000/013371

(56) Entgegenhaltungen:
- EP-A- 0 843 449
- WO-A-98/25372
- WO-A-98/36520
- US-A- 5 463 547
- ANONYMOUS: "Cryptographic Initialization Test." IBM TECHNICAL DISCLOSURE BULLETIN, Bd. 33, Nr. 9, 1. Februar 1991 (1991-02-01), Seiten 195-198, XP002128785 New York, US

## Beschreibung

Die vorliegende Erfindung bezieht sich auf ein System und auf ein Verfahren zum Verschlüsseln von Ablaufkontroll-Information in Netzwerk-Anwendungen. Insbesondere bezieht sich die vorliegende Erfindung auf ein System und ein Verfahren zum Verschlüsseln und Speichern von während einer Benutzersitzung zwischen einem Client und einer Server-Umgebung ausgetauschten Informationen. Das System und das Verfahren können dazu benutzt werden, die Benutzersitzung wiederzuerzeugen (englisch: recreate) oder später zu verifizieren, daß ein bestimmtes Ereignis während der Benutzersitzung eingetreten ist.

In einer Netzwerk-Anwendung, die auch als Client/Server-Anwendung bezeichnet wird, fordert ein Client von einem Server Information an. Der Server liefert als Antwort auf jede Anforderung Informationen an den Client. Ein typischer Server kann mehreren hundert Clienten gleichzeitig antworten, während der Client auf mehrere Server intermittierend und über eine sehr kurze Zeitspanne hinweg zugreifen kann. Wegen der sehr dynamischen Natur solcher Anwendungen sind Probleme, die mit der Anwendung verbunden sind, schwierig zu isolieren, zu reproduzieren und/oder zu diagnostizieren. Desweiteren ist es schwierig, solche Probleme entweder auf den Server oder den Client zurückzuführen.

Ein anderes Problem, das mit Netzwerk-Anwendungen verknüpft ist, insbesondere mit solchen, die elektronischen Handelsverkehr ("E-commerce") abwickeln, besteht darin, daß das genaue Verhalten des Käufers während des Geschäftsabschlusses schwierig zu ermitteln und noch schwieriger auszuwerten oder zu verstehen ist. Beispielsweise kann es sein, daß der Entwickler einer Website verstehen möchte, wie ein bestimmter Käufer, der eine E-commerce-Anwendung benutzt, durch die Website navigiert, um einen Artikel zu erwerben. Angesichts der Natur konventioneller Netzwerk-Anwendungen ist ein solches Verständnis schwierig zu gewinnen.

Ein weiteres Problem, das mit Netzwerk-Anwendungen verknüpft ist, insbesondere mit solchen, bei denen zu der Benutzersitzung gehörende Daten gespeichert werden, betrifft die Sicherheit und die Vertraulichkeit. Benutzer stehen der Speicherung von Daten, die sich auf ihre Benutzersitzungen beziehen, möglicherweise ablehnend gegenüber. Betreiber von Servern können es ablehnen, Informationen, die das Verhalten ihrer Kunden und ihr damit verknüpftes eigenes Verhalten betreffen, dem Zugriff von Wettbewerbern auszusetzen.

Noch ein weiteres Problem bei Netzwerkanwendungen besteht darin, daß die Benutzer der Clients und die Betreiber von Servern nicht überprüfen oder beweisen können, daß ein bestimmtes Ereignis (z.B. ein Kauf) während einer bestimmten Benutzersitzung stattgefunden hat.

Es bestehen noch weitere Probleme bei Netzwerk-Anwendungen, von denen einige im folgenden detaillierter diskutiert werden. Es besteht ein Bedarf für ein System und ein Verfahren zur Ablaufkontrolle (englisch: "auditing") von Netzwerk-Anwendungen, das die hier beschriebenen Probleme löst.

Aus der Veröffentlichung M. Bishop; A model of security monitoring, IEEE 1990, Seite 46 - 52 ist ein Speicherungs- und Kontrollverfahren einer Computersitzung bekannt, bei dem Daten einer Computersitzung verschlüsselt gespeichert werden.

Aus der EP 0 843 449 A2 ist ein schlüsselbasiertes Verschlüsselungssystem bekannt, bei dem ein Client einen client specific key erhält, um Daten, die auf einem Server gespeichert sind, lesen zu können.

Die vorliegende Erfindung richtet sich auf ein System und ein Verfahren zum Verschlüsseln von Information zur Kontrolle des Ablaufs von Netzwerkanwendungen. Insbesondere erfaßt die vorliegende Erfindung Anforderungen und Antworten, die zwischen einem Client und einem Server während einer bestimmten Benutzersitzung einer Netzwerk-Anwendung hin- und hergesendet werden. Die vorliegende Erfindung verschlüsselt entweder die gesamte Benutzersitzung oder Teile der Benutzersitzung, um Vertraulichkeit und Sicherheit zu gewährleisten und/oder das Verifizieren von Ereignissen, die während der Benutzersitzung eingetreten sind, zu ermöglichen. Die vorliegende Erfindung speichert die verschlüsselte Benutzersitzung (oder einen Teil davon) in einem Ablaufkontrollspeicher. Der Schlüssel, der für die Verschlüsselung der Benutzersitzung verwendet wird, wird an die Teilnehmer ausgegeben. Anschließend wird die Benutzersitzung aus dem Ablaufkontrollspeicher wiedergewonnen, die notwendigen Schlüssel werden von den Teilnehmern zurückgeholt und die Benutzersitzung wird entschlüsselt.

Einer der Vorteile der vorliegenden Erfindung besteht darin, daß die Benutzersitzung oder ein Teil von ihr sicher vor unbefugtem Zugriff in dem Ablaufkontrollspeicher gespeichert wird. In einer Ausführungsform kann die Benutzersitzung, ähnlich wie bei dem Zugriff auf ein Bankschließfach, nur mit Kenntnis und Erlaubnis jedes der Teilnehmer entschlüsselt werden.

Ein weiterer Vorteil der vorliegenden Erfindung besteht darin, daß für bestimmte Ereignisse überprüft werden kann, daß sie während der Benutzersitzung eingetreten sind. Mit anderen Worten: Ein Benutzer kann z.B. beweisen, daß er eine bestimmte Transaktion (z.B. einen elektronischen Kauf) während der Benutzersitzung ausgeführt hat. Er beweist dies, indem er an den Server oder an einen geeigneten dritten Beteiligten (englisch: "third party") Informationen liefert, die dem Eintreten eines bestimmten Ereignisses während der Benutzersitzung entsprechen und das Eintreten dieses Ereignisses beweisen.

Weitere Eigenschaften und Vorteile der vorliegenden Erfindung werden in der folgenden Beschreibung erläutert. Zum Teil sind sie aus der Beschreibung offensichtlich oder zeigen sich bei der Ausübung der Erfindung. Die Ziele und Vorteile der Erfindung werden durch das Verfahren erreicht, das in der Beschreibung und in den daraus abgeleiteten Ansprüchen sowie in den beigefügten Zeichnungen dargestellt ist.

Die vorangegangene allgemeine Beschreibung und die folgende detaillierte Beschreibung sind beispielhaft und erklärend und dazu gedacht, als weitere Erläuterung der beanspruchten Erfindung zu dienen.

Die beigefügten Zeichnungen, die ein weitergehendes Verständnis der Erfindung ermöglichen sollen, veranschaulichen Ausführungsformen der Erfindung, die zusammen mit der Beschreibung dazu dienen, die Prinzipien der Erfindung zu erklären.
- Fig. 1: veranschaulicht eine Ausführungsform der vorliegenden Erfindung, die Sitzungsdaten in einer Client/Server-Umgebung erfaßt;
- Fig. 2: veranschaulicht eine Ausführungsform der vorliegenden Erfindung, die erfaßte Sitzungsdaten in einer Ablaufkontroll-Umgebung analysiert;
- Fig. 3: ist ein Flußdiagramm, das die Arbeitsweise einer Ausführungsform der vorliegenden Erfindung beim Erfassen von Sitzungsdaten veranschaulicht;
- Fig. 4: ist ein Flußdiagramm, das die Arbeitsweise einer Ausführungsform der vorliegenden Erfindung beim visuellen Wiedererzeugen einer Benutzersitzung veranschaulicht;
- Fig. 5: ist ein Flußdiagramm, das die Arbeitsweise einer bevorzugten Ausführungsform der vorliegenden Erfindung bei der Ausführung des Schritts "Wiedererzeugen und visuelles Darstellen des dynamisch erzeugten Bildschirminhaltes" veranschaulicht;
- Fig. 6: veranschaulicht eine Analysiereinrichtung gemäß einer bevorzugten Ausführungsform der vorliegenden Erfindung detaillierter;
- Fig. 7: veranschaulicht ein Analysemodul gemäß einer bevorzugten Ausführungsform der vorliegenden Erfindung detaillierter;
- Fig. 8: ist ein Flußdiagramm, das den Schritt "Speichern von Daten in dem Ablaufkontrollspeicher" gemäß einer Ausführungsform der vorliegenden Erfindung veranschaulicht;
- Fig. 9: veranschaulicht gemäß einer Ausführungsform der vorliegenden Erfindung für eine Umgebung auf Internet-Basis eine Sternstruktur zum Speichern von OLAP-Daten;
- Fig. 10: veranschaulicht gemäß einer Ausführungsform der vorliegenden Erfindung für eine SAP R/3-Umgebung eine Sternstruktur zum Speichern von OLAPDaten;
- Fig. 11: veranschaulicht für eine Umgebung auf Internet-Basis die Datenstruktur einer Darstellungs-Tabelle gemäß einer Ausführungsform der vorliegenden Erfindung;
- Fig. 12: veranschaulicht für eine SAP R/3-Umgebung die Datenstruktur einer Darstellungs-Tabelle gemäß einer Ausführungsform der vorliegenden Erfindung;
- Fig. 13: veranschaulicht die Datenstruktur eines Dimensions-Pufferspeichers gemäß einer Ausführungsform der vorliegenden Erfindung;
- Fig. 14: veranschaulicht das Erfassen und Verschlüsseln von Sitzungsdaten in einer Client/Server-Umgebung gemäß einer Ausführungsform der vorliegenden Erfindung;
- Fig. 15: veranschaulicht das Entschlüsseln und Analysieren von erfaßten Sitzungsdaten in einer Ablaufkontroll-Umgebung gemäß einer Ausführungsform der vorliegenden Erfindung;
- Fig. 16: veranschaulicht die Arbeitsweise des Ablaufkontroll-Verschlüsselungsmoduls gemäß einer Ausführungsform der vorliegenden Erfindung;
- Fig. 17: veranschaulicht den Schritt "Erzeugen eines Verschlüsselungs-Schlüssels" gemäß einer bevorzugten Ausführungsform der vorliegenden Erfindung;
- Fig. 18: veranschaulicht die Arbeitsweise des Ablaufkontroll-Entschlüsselungsmoduls gemäß einer Ausführungsform der vorliegenden Erfindung;
- Fig. 19: veranschaulicht die Verifikation eines Ereignisses gemäß einer Ausführungsform der vorliegenden Erfindung; und
- Fig. 20: veranschaulicht die Verifikation eines Ereignisses gemäß einer weiteren Ausführungsform der vorliegenden Erfindung.

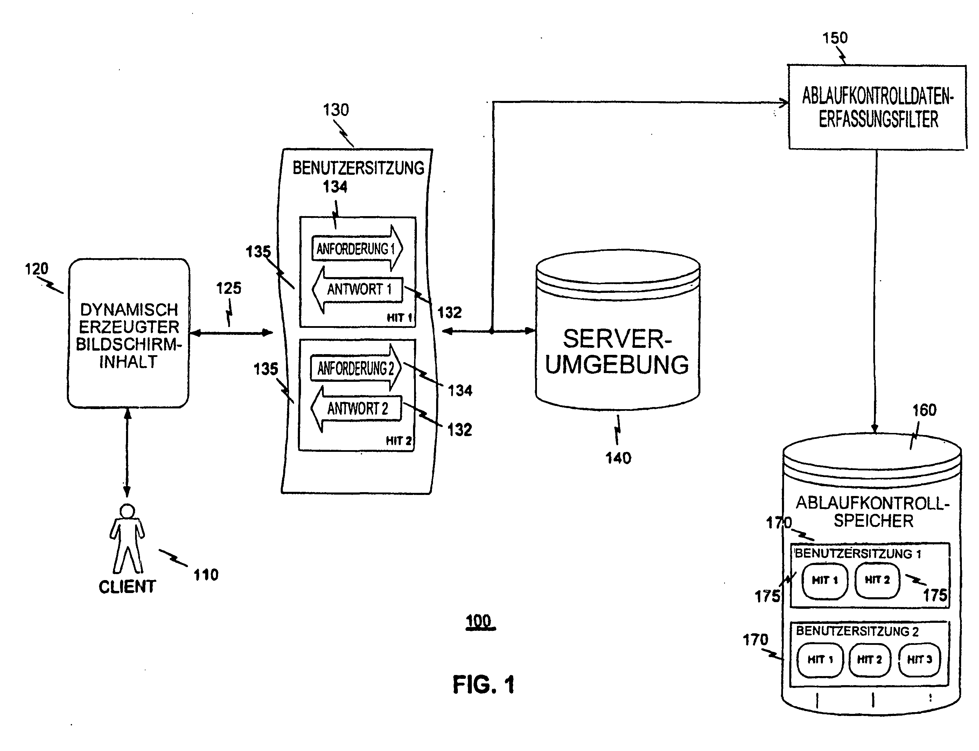

In einer Client/Server-Umgebung 100, wie sie in Fig. 1 dargestellt ist, kommuniziert ein Client 110 mit einer Server-Umgebung 140 über eine Datenübertragungsverbindung 125. Die Server-Umgebung 140 kann selbstverständlich einen einzigen Netz-Server oder mehrere Server, die in Verbindung miteinander laufen, umfassen.

Ein bestimmter Satz von aufeinander bezogenen Datentransfers zwischen dem Client 110 und der Server-Umgebung 140 wird als Benutzersitzung 130 bezeichnet. Die Benutzersitzung 130 beinhaltet eine Folge von Anforderungen 134 des Client 110 an die Server-Umgebung 140 und eine Folge von Antworten 132 der Server-Umgebung 140 an den Client 110 als Reaktionen auf die Anforderungen 134. Eine bestimmte Anforderung 134 und die zu ihr gehörende Antwort 132 werden hier als ein "Hit" 135 oder als Anforderung/Antwort-Paar bezeichnet. Während einer Benutzersitzung 130 kann der Client 110 in bekannter Weise auf verschiedene Arten auf die Server-Umgebung 140 zugreifen.

Der Client 110 greift auf die Server-Umgebung 140 mittels eines dynamisch erzeugten Bildschirminhaltes 120 zu, der dem Client 110 für eine bestimmte Netzwerk-Anwendung Information anzeigt, die von der Server-Umgebung 140 stammt. Auf der Basis von Anforderungen 134 und Antworten 132 liefert die Server-Umgebung 140 Informationen, um den dynamisch erzeugten Bildschirminhalt 120 zu aktualisieren. Gemäß einer Ausführungsform der vorliegenden Erfindung wird der Bildschirminhalt 120 auf der Basis von Informationen, die in der Antwort 132 der Server-Umgebung 140 enthalten sind, durch eine (nicht gezeigte) Workstation des Client 110 dynamisch erzeugt. In einer Ausführungsform der vorliegenden Erfindung wird der dynamisch erzeugte Bildschirminhalt 120 von der Workstation auf Basis einer Antwort 132 erzeugt, die eine Befehlssprache (englisch: "mark up language") wie HTML (hypertext mark up language), XML (extensible mark up language), SGML (standard generalized mark up language) und dergleichen benutzt, wie sie in verschiedenen Client/Server-Umgebungen 100 verwendet werden. In einer alternativen Ausführungsform der vorliegenden Erfindung wird der dynamisch erzeugte Bildschirminhalt 120 von einer Workstation des Client 110 auf Basis einer Antwort 132 erzeugt, die Information enthält, welche kompatibel zu Formaten ist, die in einer dedizierten on-line-Umgebung wie z.B. einer SAP R/3-Umgebung verwendet wird.

Die folgende Diskussion erfolgt auf der Grundlage einer Client/Server-Umgebung 100, die in einer Umgebung auf Internet-Basis oder auf Web-Basis arbeitet. Selbstverständlich bezieht sich die vorliegende Erfindung jedoch auch auf ein System, in dem der Client 110 mit der Server-Umgebung 140, wie beispielsweise in der SAP R/3-Umgebung, direkt festverdrahtet ist. Für einen Fachmann ist es klar, in welcher Weise die folgende Diskussion auf solche festverdrahteten oder "dedizierten" Systeme übertragbar ist.

Gemäß der vorliegenden Erfindung überwacht ein Ablaufkontrolldaten-Erfassungsfilter 150 die Datenübertragungsverbindung 125, um Mitteilungen (d.h. Anforderungen 134 und Antworten 132) zwischen dem Client 110 und der Server-Umgebung 140 zu erfassen (englisch: "to capture"). Insbesondere erfaßt der Ablaufkontrolldaten-Erfassungsfilter 150 die Anforderung 134 des Client 110 an die Server-Umgebung 140 und die Antwort 132 der Server-Umgebung 140 an den Client 110. In einer Ausführungsform der vorliegenden Erfindung erfaßt der Ablaufkontrolldaten-Erfassungsfilter 150 die Anforderung 134 in der Datenübertragungsverbindung 125, nachdem die Server-Umgebung 140 die Anforderung 134 empfangen hat, aber bevor sie die Anforderung 134 verarbeitet hat. Bei dieser Ausführungsform der vorliegenden Erfindung erfaßt der Ablaufkontrolldaten-Erfassungsfilter 150 die Antwort 132, nachdem die Server-Umgebung 140 die Anforderung 134 verarbeitet und die Antwort 132 ermittelt hat, aber bevor sie die Antwort 132 absendet. Selbstverständlich sollte die Erfassungsfunktion eines bevorzugten Ablaufkontrolldaten-Erfassungsfilters 150 die Kommunikation zwischem dem Client 110 und der Server-Umgebung 140 nicht stören oder unterbrechen.

In der zuvor beschriebenen Ausführungsform der vorliegenden Erfindung weist die Server-Umgebung 140 die Modifikationen auf, die notwendig sind, um dem Ablaufkontrolldaten-Erfassungsfilter 150 den Zugriff auf die Anforderungen 134 und die Antworten 132 zu ermöglichen. Mit anderen Worten: die Server-Umgebung 140 stellt mit bekannten Mitteln dem Ablaufkontrolldaten-Erfassungsfilter 150 die Hooks für die Sitzungsdaten zur Verfügung. In dieser Ausführungsform erfaßt der Ablaufkontrolldaten-Erfassungsfilter 150 die Anforderungen 134 und die Antworten 132 im Zusammenwirken mit der Server-Umgebung 140 und möglicherweise mit Hilfe ihrer aktiven Teilnahme.

In einer alternativen Ausführungsform der vorliegenden Erfindung benötigt der Ablaufkontrolldaten-Erfassungsfilter 150 die oben diskutierten Modifikationen der Server-Umgebung 140 nicht. In dieser Ausführungsform erfaßt der Ablaufkontrolldaten-Erfassungsfilter 150 die Anforderungen 134 und die Antworten 132 direkt von der Datenübertragungsverbindung 125. Die Server-Umgebung 140 arbeitet dabei ohne Bezug auf die Anwesenheit des Ablaufkontrolldaten-Erfassungsfilters 150.

Der Ablaufkontrolldaten-Erfassungsfilter 150 speichert die erfaßte Anforderung 134 und die erfaßte Antwort 132 in einem Ablaufkontrollspeicher 160. In einer bevorzugten Ausführungsform werden eine erfaßte Anforderung 134 und eine erfaßte Antwort 132 als ein Hit 135 gespeichert. Der Ablaufkontrollspeicher 160 weist selbstverständlich eine Speichervorrichtung auf, beispielsweise ein Plattenlaufwerk, ein RAM oder eine andere derartige Speichereinrichtung. In einigen bevorzugten Ausführungsformen der vorliegenden Erfindung speichert der Ablaufkontrollspeicher 160 alle Hits 135 einer bestimmten Benutzersitzung 130 als gespeicherte Hits 175 einer gespeicherten Benutzersitzung 170. Mit anderen Worten: Die Folgen von erfaßten Anforderungen 134 und erfaßten Antworten 132, die eine bestimmte Benutzersitzung 130 beinhaltet, werden insgesamt als gespeicherte Benutzersitzung 170 abgespeichert.

In einer Ausführungsform der vorliegenden Erfindung wird die Benutzersitzung 130 über ein Internet geführt. In diesem Fall befinden sich der Client 110 und die Server-Umgebung 140 nach jeder Übertragung (d.h. nach jeder Anforderung 134 des Client 110 an die Server-Umgebung 140 und nach jeder Antwort 132 der Server-Umgebung 140 an den Client 110) nicht in aktiver Verbindung (d.h. die Verbindung ist effektiv getrennt). In einer solchen Anwendung wird eine eindeutige Identifikation der Sitzung (hier auch als Status-Identifikation bezeichnet) benutzt, um einen bestimmten Client 110 jedesmal zu identifizieren, wenn er auf die Server-Umgebung 140 zugreift. Die Identifikation der Sitzung wird mit jeder Anforderung 134 gesendet, um den Benutzerkontext eindeutig zu bestimmen. Dadurch, daß die Server-Umgebung 140 die Identifikation der Sitzung dazu benutzt, jede Anforderung 134 einem bestimmten Client 110 zuzuordnen, ist die Server-Umgebung 140 in der Lage, den Client 110 über das Internet so zu behandeln, als ob er ständig mit der Server-Umgebung 140 verbunden wäre.

In einer zweiten Ausführungsform der vorliegenden Erfindung sind der Client 110 und die Server-Umgebung 140 ständig über eine dedizierte Datenübertragungsverbindung 125 verbunden. In dieser Ausführungsform der vorliegenden Erfindung ist nicht für jede Anforderung 134 eine Identifikation der Sitzung notwendig; vielmehr erfolgt die Identifikation der Sitzung implizit bei jeder Übertragung zwischen dem Client 110 und der Server-Umgebung 140, da die Verbindung durch die dedizierte Datenübertragungsverbindung 125 erfolgt.

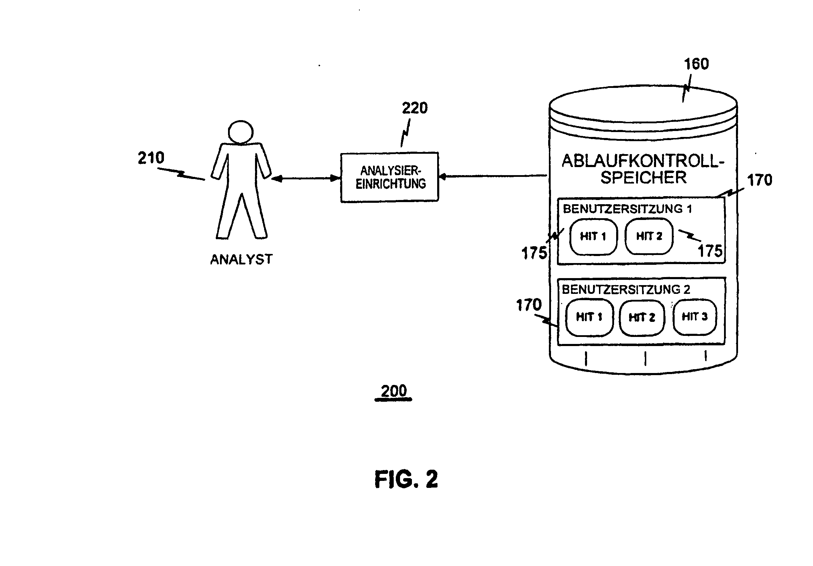

Wie oben diskutiert wurde, wird eine Folge von Anforderungen 134 und Antworten 132 einer Benutzersitzung 130 zwischen dem Client 110 und der Server-Umgebung 140 in dem Ablaufkontrollspeicher 160 als gespeicherte Hits 175 der gespeicherten Benutzersitzung 170 gespeichert. Bezugnehmend auf Fig. 2 ermöglicht eine Analysiereinrichtung 220 es einem Analyst 210, die Benutzersitzung 170 zu analysieren. Der Analyst 210 kann z.B. die Benutzersitzung 170 auswerten, um festzustellen, wie sich der Client 110 zum Erreichen eines bestimmten Ergebnisses durch eine bestimmte Netzwerk-Anwendung bewegt. Eine solche Auswertung ist z.B. bei kommerziellen (E-commerce) Internetanwendungen nützlich. Bei derartigen Anwendungen sind Anwendungsentwickler daran interessiert, zu verstehen, wie ein Client 110 eine bestimmte Anwendung durchläuft, um zu einem bestimmten Ergebnis, wie z.B. einem Kauf, zu gelangen. Die vorliegende Erfindung erlaubt dem Analysten 210, die bestimmte Anwendung für verschiedene Clienten 110 für unterschiedliche Zeitpunkte, usw. auszuwerten.

In einem anderen Beispiel kann der Analyst 210 die Benutzersitzung 170 auswerten, um Fehler zu isolieren, die während der Benutzersitzung 130 aufgetreten sind. In diesem Beispiel kann er die gesamte Benutzersitzung 130 wiedererzeugen, um ein bei einer bestimmten Netzwerk-Anwendung aufgetretenes Problem zu identifizieren und zu isolieren.

Wie in Fig. 2 gezeigt ist, benutzt der Analyst 210 die Analysiereinrichtung 220, um auf den Ablaufkontrollspeicher 160 zuzugreifen. Insbesondere ist der Analyst 210 in der Lage, auf eine Benutzersitzung 170 zuzugreifen und sie visuell wiederzuerzeugen. Mit anderen Worten: der Analyst 210 kann die bestimmte Benutzersitzung 170 Schritt für Schritt durchlaufen und jede Anforderung 134 und jede Antwort 132, so wie sie während der Benutzersitzung 170 aufgetreten sind, individuell anzeigen und auswerten. In einer bevorzugten Ausführungsform der vorliegenden Erfindung reproduziert die Analysiereinrichtung 220 die Benutzersitzung 170, indem sie die verschiedenen Bildschirminhalte 120 erzeugt, die dem Client 110 während der Benutzersitzung 130 von der Server-Umgebung 140 präsentiert wurden. Auf diese Weise kann der Analyst 210 die gleichen Bildschirminhalte 120 anschauen, die der Client 110 während der Benutzersitzung 130 betrachtet hat. Der Analyst 210 ist außerdem in der Lage, jede Anforderung, die durch den Client 110 erfolgt ist, und jede darauffolgende Antwort 132 der Server-Umgebung 140 auszuwerten. Der Analyst 210 kann die Benutzersitzung 130 offline, d.h. nachdem die Benutzersitzung 170 abgeschlossen ist, oder in nahezu Echtzeit, d.h. während die Benutzersitzung 170 stattfindet, auswerten. In der letztgenannten Ausführungsform kann die Analysiereinrichtung 220 Hits 175 entweder aus dem Ablaufkontrollspeicher 160 oder unter Umgehung des Ablaufkontrollspeichers 160 direkt aus dem Ablaufkontrolldaten-Erfassungsfilter 150 zurückgewinnen.

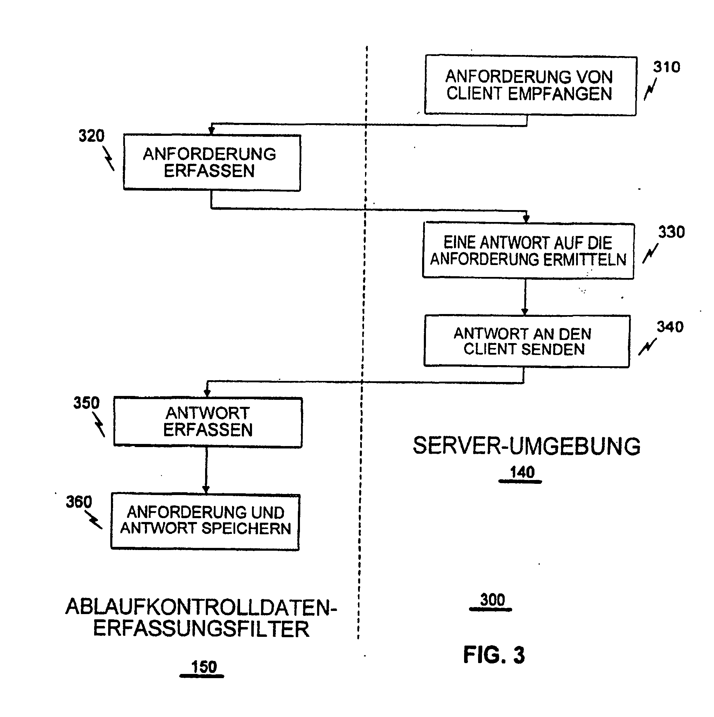

Nachdem die Komponenten der vorliegenden Erfindung beschrieben sind, wird nun deren Arbeitsweise diskutiert. Fig. 3 ist ein Flußdiagramm, das gemäß einer Ausführungsform der vorliegen Erfindung einen Betriebsablauf 300 des Ablaufkontrolldaten-Erfassungsfilters 150 beim Erfassen von Anforderungen 134 und Antworten 132 während einer Benutzersitzung 130 veranschaulicht. In einem Schritt 310 empfängt die Server-Umgebung 140 eine Anforderung 134 von dem Client 110. In einem Schritt 320 erfaßt der Ablaufkontrolldaten-Erfassungsfilter 150 die Anforderung 134. In einer Ausführungsform geschieht dies in der Server-Umgebung 140. Insbesondere erfaßt in dieser Ausführungsform der Ablaufkontrolldaten-Erfassungsfilter 150 die Anforderung 134 von der Server-Umgebung 140, nachdem die Server-Umgebung 140 die Anforderung 134 empfängt, aber bevor sie die Anforderung 134 verarbeitet. In einer alternativen Ausführungsform kann die Server-Umgebung 140 die Anforderung 134 an den Ablaufkontrolldaten-Erfassungsfilter 150 weiterleiten. Natürlich existieren weitere Mechanismen, die es dem Ablaufkontrolldaten-Erfassungsfilter 150 erlauben, Zugriff auf die Anforderung 134 zu erhalten. In jedem Fall stört oder unterbricht das Erfassen der Anforderung 134 nicht die Kommunikation zwischem dem Client 110 und der Server-Umgebung 140.

In einer alternativen Ausführungsform der vorliegenden Erfindung erfaßt der Ablaufkontrolldaten-Erfassungsfilter 150 die Anforderung 134 direkt von der Datenübertragungsverbindung 125 ohne Mitwirkung oder Teilnahme der Server-Umgebung 140.

In einer bevorzugten Ausführungsform der vorliegenden Erfindung schließt das Erfassen der Anforderung 134 das Erfassen oder Bestimmen bestimmter (nicht dargestellter) Umgebungsdaten ein, die etwa zu der Zeit, zu der die Anforderung 134 abgeschickt oder erfaßt wurde, mit dem Client 110 und der Server-Umgebung 140 assoziiert waren. Diese Umgebungsdaten enthalten Parameter wie z.B. Auslastung, Umfang des Datenverkehrs, Status oder andere derartige Informationen, die auf der Datenübertragungsverbindung 125 verfügbar und die in der Client/Server-Umgebung 100 bekannt sind. Wie unten diskutiert wird, ermöglichen die Umgebungsdaten es der Analysiereinrichtung 220, den Einfluß der Client/Server-Umgebung 100 auf eine bestimmte Benutzersitzung 170 auszuwerten.

In einem Schritt 330 bestimmt die Server-Umgebung 140 eine Antwort 132 auf die Anforderung 134 des Client 110. In einem Schritt 340 sendet die Server-Umgebung 140 die Antwort 132 an den Client 110. In einem Schritt 350 erfaßt gemäß einer Ausführungsform der vorliegenden Erfindung der Ablaufkontrolldaten-Erfassungsfilter 150 die Antwort 132 der Server-Umgebung 140 an den Client 110. In einer alternativen Ausführungsform kann die Server-Umgebung 140 die Antwort 132 an den Ablaufkontrolldaten-Erfassungsfilter 150 weitergeben. In einer weiteren alternativen Ausführungsform der vorliegenden Erfindung erfaßt der Ablaufkontrolldaten-Erfassungsfilter 150 die Antwort 132 direkt von der Datenübertragungsverbindung 125. Wie oben unter Bezug auf das Erfassen der Anforderung 134 diskutiert wurde, beinhaltet das Erfassen der Antwort 132 in einer bevorzugten Ausführung der vorliegenden Erfindung zudem das Erfassen von Umgebungsdaten, die mit der Antwort 132 verknüpft sind.

Schließlich speichert der Ablaufkontrolldaten-Erfassungsfilter 150 in einem Schritt 360 die erfaßte Anforderung 134 und die erfaßte Antwort 132 als Hit 175 in dem Ablaufkontrollspeicher 160. Insbesondere wird jeder Hit 175 (oder jedes Anforderung/Antwort-Paar) zusammen mit anderen Hits, die zu einer bestimmten Benutzersitzung 170 gehören, in dem Ablaufkontrollspeicher 160 gespeichert.

In einer alternativen Ausführungsform der vorliegenden Erfindung speichert der Ablaufkontrolldaten-Erfassungsfilter 150 die Anforderung 134 in dem Ablaufkontrollspeicher 160, sobald diese erfaßt ist, anstatt auf eine zugehörige Antwort 132 zu warten. Die Anforderung 134 und die Antwort 132 werden also jeweils gespeichert, sobald sie erfaßt sind.

Gemäß einer Ausführungsform der vorliegenden Erfindung erfaßt oder empfängt der Ablaufkontrolldaten-Erfassungsfilter 150 Anforderungen 134 und/oder Antworten 132 von der Server-Umgebung 140. Bei einer praktischen Implementierung kann der Ablaufkontrolldaten-Erfassungsfilter 150 in der Server-Umgebung 140 resident sein und in Verbindung mit ihr arbeiten. Bei dieser Implementierung der vorliegenden Erfindung benötigt der Client 110 in Verbindung mit dem Ablaufkontrolldaten-Erfassungsfilter 150 weder Software, Hardware oder eine Kombination von Software und Hardware noch eine Modifikation an seiner Software oder Hardware.

In einer alternativen Ausführungsform erfaßt der Ablaufkontrolldaten-Erfassungsfilter 150 die Anforderungen 134 und die Antworten 132 direkt von der Datenübertragungsverbindung 125. Bei dieser Ausführungsform sind in Verbindung mit dem Ablaufkontrolldaten-Erfassungsfilter 150 weder in dem Client 110 noch in der Server-Umgebung 140 zusätzliche Software oder Hardware erforderlich.

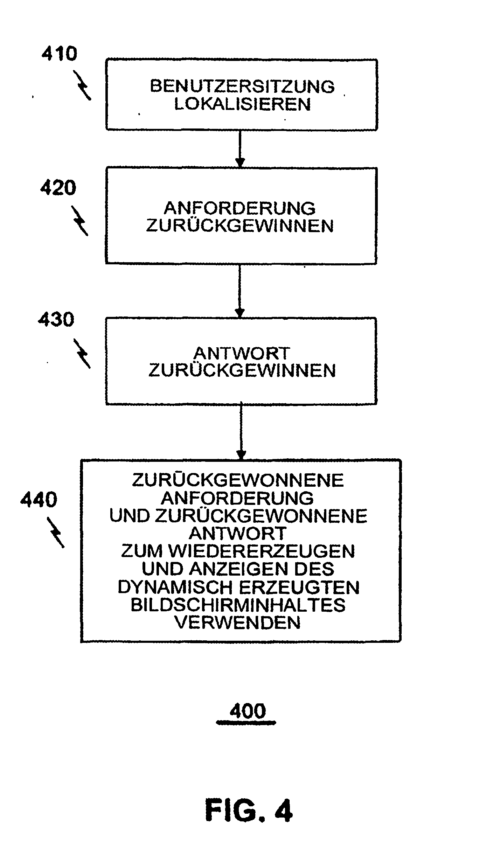

Fig. 4 ist ein Flußdiagramm, das die Arbeitsweise 400 der Analysiereinrichtung 220 veranschaulicht, die gemäß einer Ausführungsform der vorliegenden Erfindung das Analysieren einer Benutzersitzung 170 ermöglicht. In einem Schritt 410 lokalisiert die Analysiereinrichtung 220 eine bestimmte Benutzersitzung 170 in dem Ablaufkontrollspeicher 160. In einer alternativen Ausführungsform, die ohne Ablaufkontrollspeicher 160 arbeitet, gibt die Analysiereinrichtung 220 dem Ablaufkontrolldaten-Erfassungsfilter 150 eine bestimmte Benutzersitzung 170 an, die analysiert werden soll.

Die Benutzersitzung 170 kann durch eine Vielzahl von Mechanismen lokalisiert werden. Solche Mechanismen können es der Analysiereinrichtung ermöglichen, entsprechend dem Datum und/oder der Sitzungsnummer, die zu einer bestimmten gesuchten Benutzersitzung 170 gehören, auf den Ablaufkontrollspeicher 160 zuzugreifen. Es kann jedoch sein, daß das Datum und die Sitzungsnummer nicht in jedem Fall bekannt sind. Für den Fachmann ist klar, daß die Analysiereinrichtung 220 andere Mechanismen zur Lokalisierung der Benutzersitzung 170 bereitstellen kann, z.B. das Durchsuchen des Ablaufkontrollspeichers 160 nach Schlüsselworten, nach Identifikatoren (z.B. den Client kennzeichnenden Daten, wie beispielsweisen dessen Benutzerkennung) usw., oder irgendeine andere Art und Weise, den Ablaufkontrollspeicher 160 zu durchsuchen.

Nachdem eine Benutzersitzung 170 lokalisiert ist, gewinnt (englisch: retrieves) die Analysiereinrichtung 220 in einem Schritt 420 die Anforderung 134 aus dem Ablaufkontrollspeicher 160 zurück. Gleichermaßen gewinnt die Analysiereinrichtung 220 in einem Schritt 430 die Antwort 132, die der Anforderung 134 entspricht, aus dem Ablaufkontrollspeicher 160 zurück. Wie oben diskutiert wurde, kann die Analysiereinrichtung 220 in einer alternativen Ausführungsform der vorliegenden Erfindung die Anforderung 134 und die Antwort 132 direkt aus dem Ablaufkontrolldaten-Erfassungsfilter 150 zurückgewinnen.

In einer bevorzugten Ausführungsform der vorliegenden Erfindung gewinnt die Analysiereinrichtung 220 beim Zurückgewinnen der Anforderung 134 und der Antwort 132 auch zugehörige Umgebungsdaten zurück, die mit jeder Anforderung 134 und Antwort 132 gespeichert worden sein können, wie oben diskutiert wurde.

In einem Schritt 440 verwendet die Analysiereinrichtung 220 die zurückgewonnene Anforderung 134 und die zurückgewonnene Antwort 132 - in der bevorzugten Ausführungsform auch die zurückgewonnenen Umgebungsdaten, die jeweils zu ihnen gehören - um den Bildschirminhalt 120 wiederzuerzeugen und darzustellen. Auf diese Weise ist die Analysiereinrichtung 220 in der Lage, dem Analysten 210 einen dynamisch erzeugten Bildschirminhalt 120 zu präsentieren, der der gleiche ist wie derjenige, den der Client 110 während der Benutzersitzung 130 dargestellt hat.

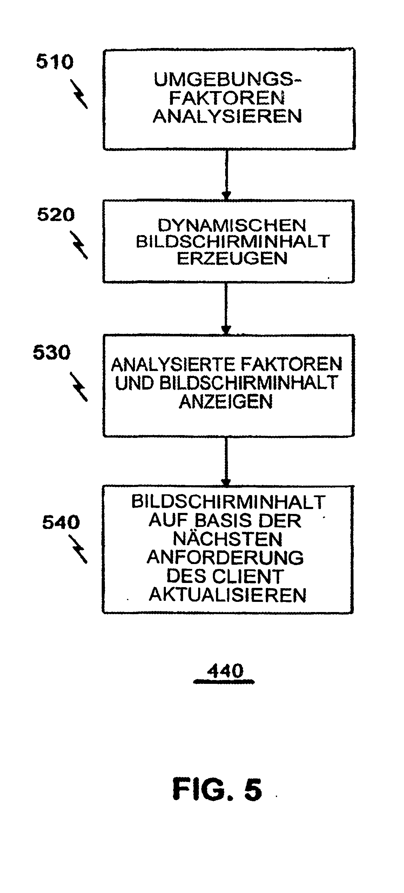

Fig. 5 veranschaulicht den Schritt 440 in einer bevorzugten Ausführungsform detaillierter. In einem Schritt 510 untersucht die Analysiereinrichtung 220 die Umgebungsdaten und andere Faktoren, die zu der zurückgewonnenen Anforderung 134 und zu der zurückgewonnenen Antwort 132 gehören. In einem Schritt 520 erzeugt sie auf Basis der zurückgewonnenen Anforderung 134 und der zurückgewonnenen Antwort 132 einen Bildschirminhalt und stellt damit den Bildschirminhalt 120 wieder her. In einem Schritt 530 zeigt die Analysiereinrichtung 220 dem Analysten 210 die analysierten Umgebungsdaten und den erzeugten Bildschirminhalt an. Dies erlaubt es dem Analysten 210, sich den wiederhergestellten Bildschirminhalt im Zusammenhang mit den Umgebungsfaktoren, die die bestimmte Benutzersitzung 170 beeinflußt haben können, anzuschauen. In einer bevorzugten Ausführungsform der vorliegenden Erfindung wird der wiedererzeugte Bildschirminhalt in einem Schritt 540 aktualisiert, um die von dem Benutzer des Client 110 eingegebenen Daten wiederzugeben. Diese Daten werden aus einer in der jeweiligen Benutzersitzung 170 nachfolgenden Anforderung 134 des Client 110 an die Server-Umgebung 140 gewonnen.

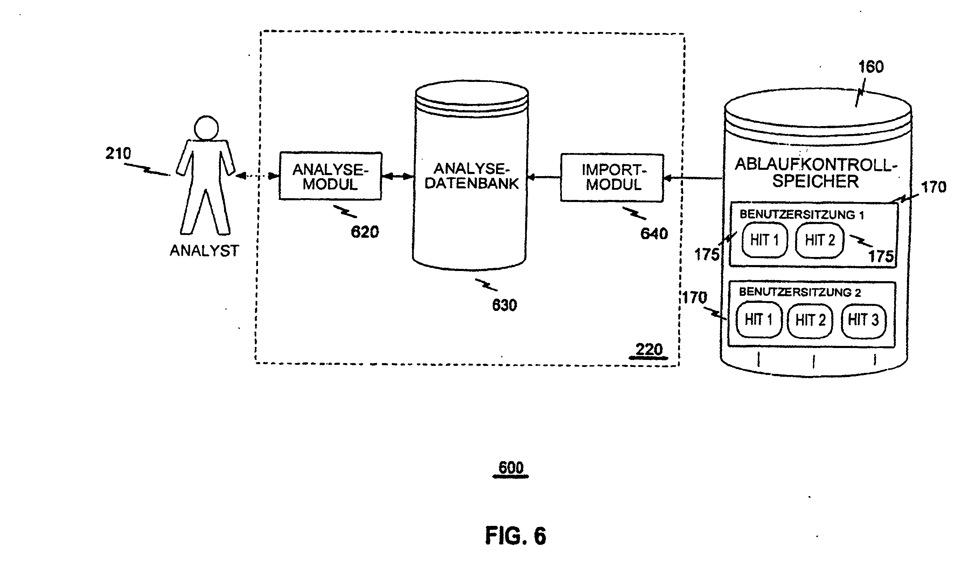

Die Analysiereinrichtung 220 wird nun unter Bezug auf Fig. 6 detaillierter diskutiert. Sie umfaßt ein Analysemodul 620, eine Analysedatenbank 630 und ein Importmodul 640. Das Importmodul 640 gewinnt aus den in dem Ablaufkontrollspeicher 160 gespeicherten Rohdaten der Benutzersitzung 170 relevante Informationen zurück, so daß sie von dem Analysten 210 verwendet werden können. In einer bevorzugten Ausführungsform gewinnt das Importmodul 640 Information aus in dem Ablaufkontrollspeicher 160 gespeicherten Hits 175 der Benutzersitzung 170 zurück und speichert sie in einem bestimmten, auf die Analysedatenbank 630 abgestimmten Format in der Analysedatenbank 630. Zum Beispiel gewinnt das Importmodul 640 bei einer Anwendung Information aus Hits 175 zurück, die in einer Internet-Umgebung erfaßt worden sind, während es bei einer anderen Anwendung Information aus Hits 175 zurückgewinnt, die in einer SAP R/3-Umgebung erfaßt worden sind. Auf diese Weise kann das Importmodul 640 Sitzungsdaten, die zu einer Vielzahl von Clienten 110 und Server-Umgebungen 140 gehören, zurückgewinnen und sie in einer zentralen, einheitlichen Datenbank, wie z.B. der Analysedatenbank 630, zusammenfassen. Somit können anschließend angewendete Analyse-Tools (wie z.B. das Analysemodul 620) die Sitzungsdaten ungeachtet des Formats der erfaßten Hits 175 analysieren. Dadurch, daß sie das gemeinsame Format der Analysedatenbank 630 verwenden, können Analyse-Tools darüber hinaus sinnvolle Vergleiche der Sitzungsdaten durchführen, die von verschiedenen Clienten 110, Server-Umgebungen 140, Anwendungen usw., vorliegen.

In einer bevorzugten Ausführungsform der vorliegenden Erfindung enthalten die Daten, die in der Analysedatenbank 630 gespeichert sind, relevante Daten aus der Anforderung 134 und der Antwort 132 und die zugehörigen Umgebungsdaten. Zu diesen Daten gehören Informationen, die mit dem Client 110 und der Server-Umgebung 140 verknüpft und aus ihnen abgeleitet sind, sowie die verwendeten Kommunikationsprotokolle und weitere relevante Informationen, die für denjenigen, der mit verschiedenen Netzwerk-Protokollen vertraut ist, geläufig sind.

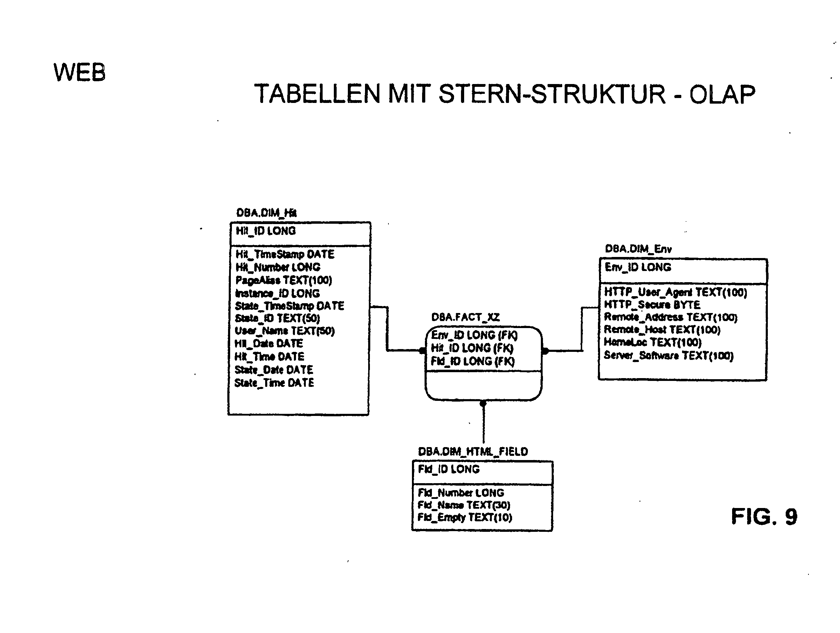

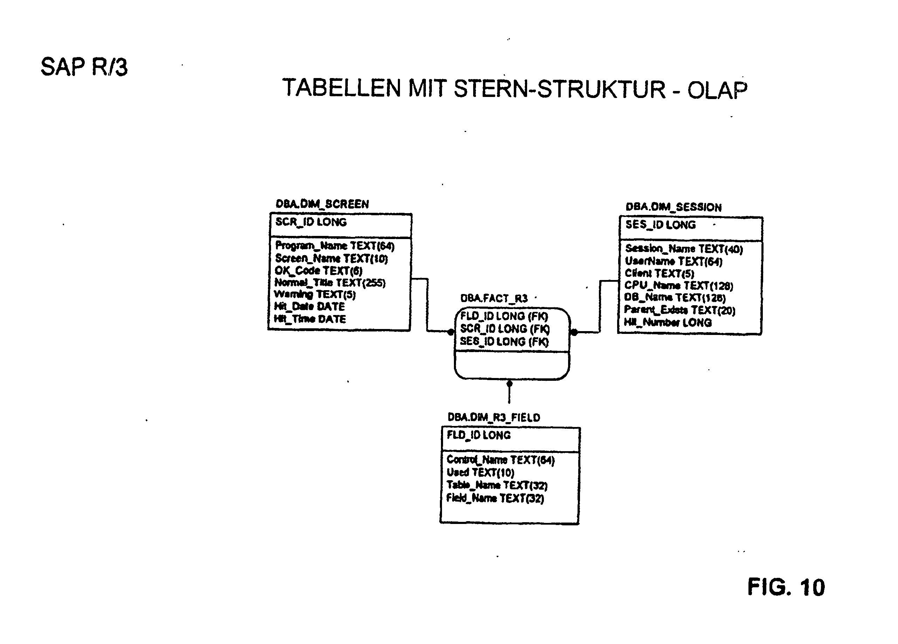

In einer bevorzugten Ausführungsform der vorliegenden Erfindung weist die Analysedatenbank 630 für jede Anwendung in der Client/Server-Umgebung 100 zwei Sätze von Tabellen auf. Der erste Satz von Tabellen wird als OLAP ("On-line Analytical Processing")-Analysetabellen bezeichnet. Sie sind für eine vorläufige OLAP-Analyse ausgelegt und optimiert. In einer bevorzugten Ausführungsform der vorliegenden Erfindung weisen die OLAP-Analysetabellen eine Sternstruktur auf und sind vollständig indexiert. Fig. 9 veranschaulicht eine bevorzugte Ausführungsform für eine Sternstruktur für Hits, die in einer Internet-Umgebung oder in einer Umgebung auf Web-Basis erfaßt wurden, während Fig. 10 eine bevorzugte Ausführungsform für eine Sternstruktur für Hits veranschaulicht, die in einer SAP R/3-Umgebung erfaßt wurden.

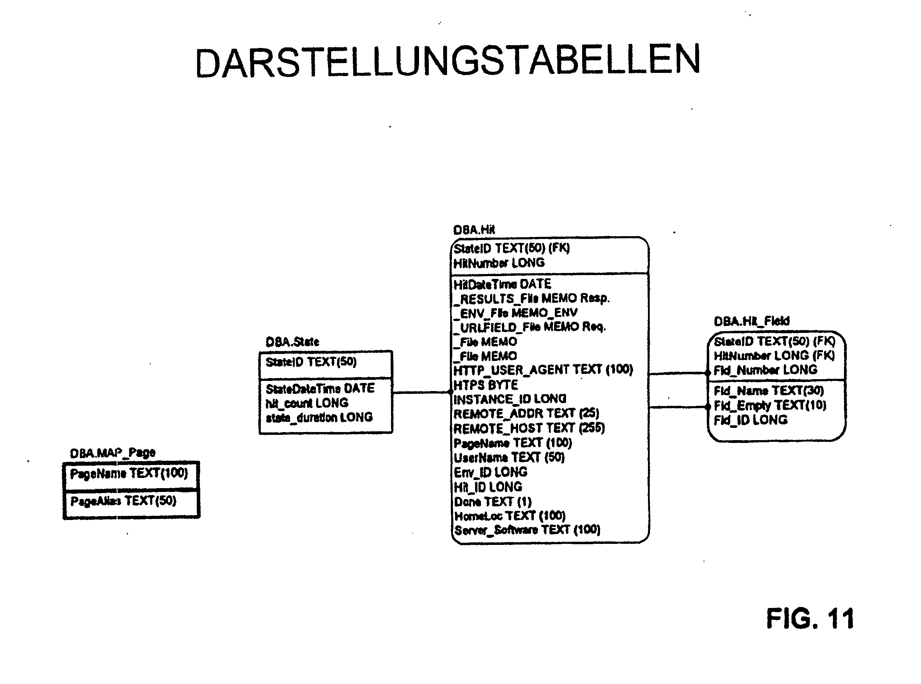

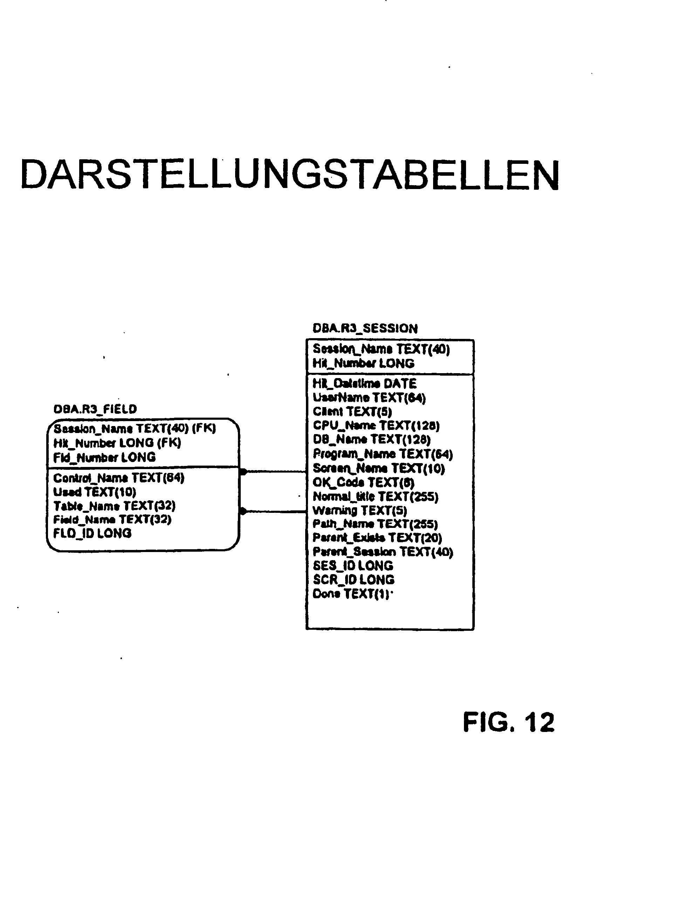

Der zweite Satz von Tabellen in der Analysedatenbank 630 wird als Sitzungs-Darstellungs/Analyse-Tabellen bezeichnet. Die Sitzungs-Darstellungs/Analyse-Tabellen sind dazu ausgelegt und optimiert, die Benutzersitzung 130 visuell wiederzuerzeugen und eine sitzungsspezifische Analyse durchzuführen. Die Sitzungs-Darstellungs/Analyse-Tabellen enthalten die gesamte Information der Hits sowie Informationen über das Wiedererzeugen von verfügbaren Sitzungen und Informationen, die aus der Sitzungs-Identifikation zurückgewonnen wurden. Fig. 11 veranschaulicht eine bevorzugte Ausführungsform einer Darstellungstabelle für Hits, die in der Internet-Umgebung (auf Web-Basis) erfaßt wurden, während Fig. 12 eine bevorzugte Ausführungsform einer Darstellungstabelle für Hits, die in einer SAP R/3-Umgebung erfaßt wurden, veranschaulicht.

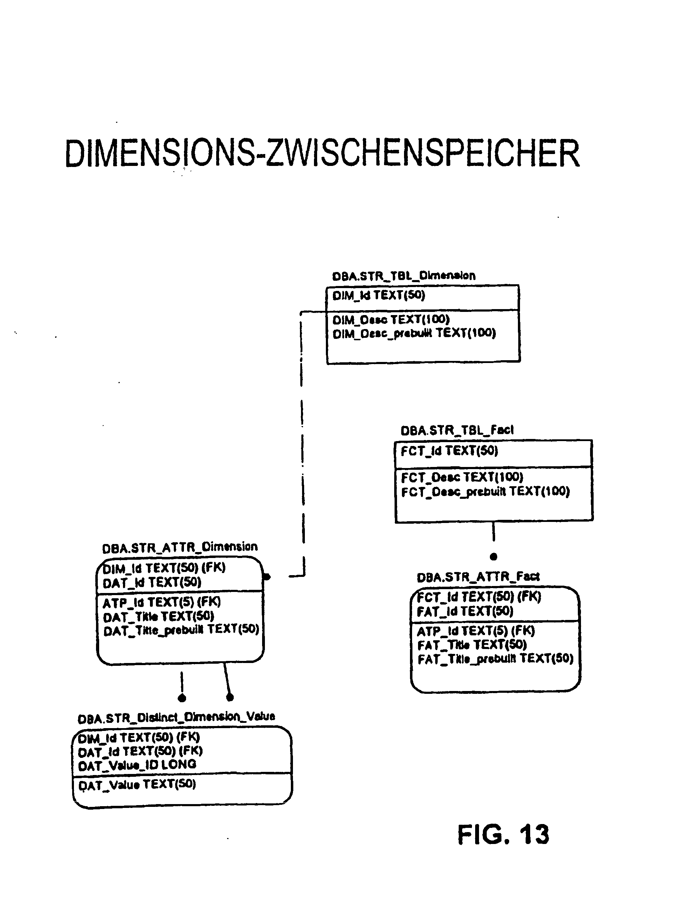

Fig. 13 veranschaulicht eine Datenstruktur eines Dimensions-Zwischenspeichers gemäß einer Ausführungsform der vorliegenden Erfindung. Die Dimensions-Zwischenspeicher-Datenstruktur ist nützlich, um die OLAP-Analyse zu beschleunigen.

In einer Ausführungsform der vorliegenden Erfindung speichert das Importmodul 640 Informationen aus dem Ablaufkontrollspeicher 160 auch in ein (nicht gezeigtes) Archiv. Das Archiv ist vorzugsweise eine dauerhaftere Speichereinrichtung. Die in dem Archiv gespeicherte Informationen können Rohdaten sein, wie sie in dem Ablaufkontrollspeicher 160 gespeichert sind. Es können auch Daten aus dem Ablaufkontrollspeicher 160 sein, die von unwesentlichen, nicht mit der Funktion oder der Arbeitsweise der Analysiereinrichtung 220 verknüpften Informationen befreit wurden. In jedem Fall werden die Informationen, die in dem Archiv gespeichert werden, entsprechend der zu jeder Benutzersitzung 130 gehörenden Sitzungs-Identifikationsnummer indexiert. Da die Identifikation jeder Sitzung eindeutig ist und nicht wiederholt wird, kann das Archiv Benutzersitzungen 170 aus einer Vielzahl von Quellen und von Anwendungen speichern, ohne daß die Gefahr eines Konfliktes, der den Verlust von Daten nach sich zieht, besteht.

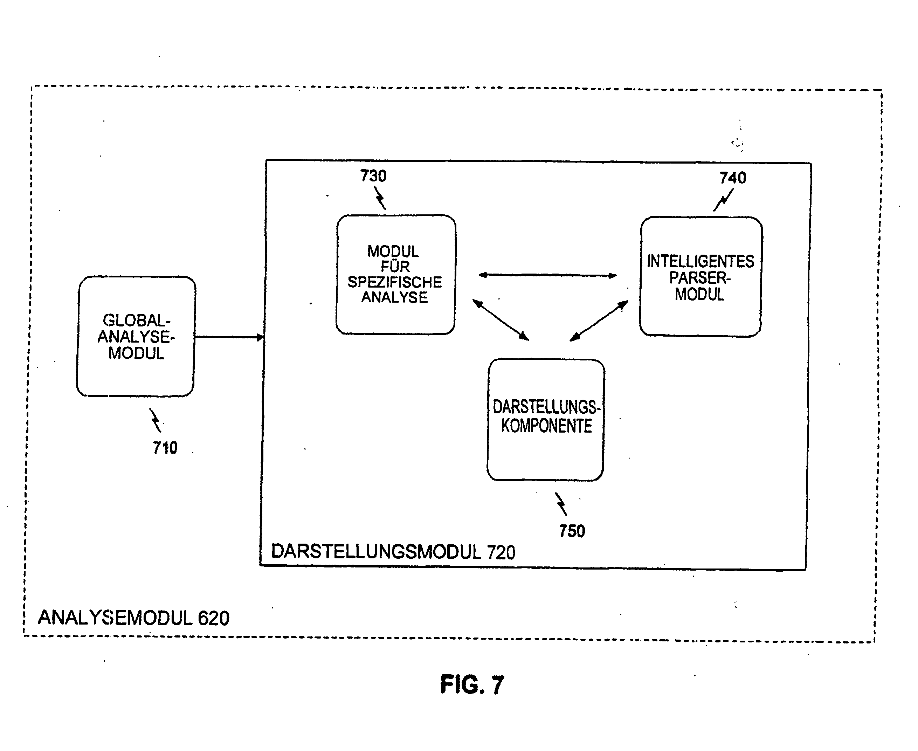

Das Analysemodul 620 wird nun in bezug auf Fig. 7 detaillierter beschrieben. Es umfaßt ein Globalanalysemodul 710 und ein Darstellungsmodul 720. Das Darstellungsmodul 720 umfaßt ein Modul für spezifische Analyse 730, ein intelligentes Parsermodul 740 und eine Darstellungskomponente 750.

Das Globalanalysemodul 710 ermöglicht es dem Analysten 210, Benutzersitzungen 170, die in der Analysedatenbank 630 gespeichert sind und die von verschiedenen Clienten 110, Server-Umgebungen 140 und verschiedenen in der Client/Server-Umgebung 100 laufenden Anwendungen stammen, dynamisch zu analysieren. Zum Beispiel ermöglicht es das Globalanalysemodul 110 dem Analysten 210, Benutzersitzungen 170 für alle Clienten 110 zu analysieren, die auf eine bestimmte Site in der Server-Umgebung 140 zugegriffen haben. In einem anderen Beispiel ermöglicht das Globalanalysemodul 710 dem Analysten 210, Benutzersitzungen 170 für einen bestimmten Client 110 zu analysieren, der auf eine Vielzahl von Sites in verschiedenen Server-Umgebungen 140 zugegriffen hat. In einem weiteren Beispiel ermöglicht es das Globalanalysemodul 710 dem Analysten 210, alle Benutzersitzungen 170 für alle Clienten 110 in allen Server-Umgebungen 140 zu analysieren, die an einem bestimmten Tag zum Kauf von Waren geführt haben. Dies sind nur Beispiele dafür, wie das Globalanalysemodul 710 auf die Analysedatenbank 630 zugreifen kann, wobei eine Beschränkung nur durch den Informationsumfang, der in der Analysedatenbank 630 selbst zur Verfügung steht, gegeben ist.

Das Darstellungsmodul 720 dient dazu, eine bestimmte Benutzersitzung 130 visuell wiederzuerzeugen, eine Analyse des Sitzungslevels (englisch: session level analysis) vorzunehmen und die Benutzersitzung dem Analysten 210 zu präsentieren. Wie oben erwähnt wurde, umfaßt das Darstellungsmodul 720 eine Komponente für spezifische Analyse 730, ein intelligentes Parser-Modul 740 und eine Darstellungskomponente 750. Die Komponente für spezifische Analyse 730 stellt statistische Informationen bereit, die zu einem bestimmten dynamisch erzeugten Bildschirminhalt 120 gehören, sowie Umgebungsdaten, die zu diesem Bildschirminhalt zum Zeitpunkt seiner Erzeugung und/oder Anzeige für den Client 110 gehören. In einer bevorzugten Ausführungsform der vorliegenden Erfindung berechnet die Komponente 730 für spezifische Analyse auch Überlastungen in der Client/Server-Umgebung 100 auf dem Server 140 oder auf der Datenübertragungsleitung 125 für den Zeitpunkt, zu dem der Bildschirminhalt 120 dem Client 110 durch die Server-Umgebung 140 zur Verfügung gestellt wurde.

Die Darstellungskomponente 750 ist dafür verantwortlich, die Benutzersitzung 170 physisch darzustellen. Insbesondere stellt die Darstellungskomponente 750 dem Analysten 210 Mittel zur Verfügung, um die Benutzersitzung 170 durchzugehen und die statistischen Daten, die von der Komponente für spezifische Analyse 730 bereitgestellt werden, anzuzeigen. In einer bevorzugten Ausführungsform der vorliegenden Erfindung existiert für jede Client/Server-Anwendung eine eigene Darstellungskomponente 750. Für HTML und XML umfaßt die Darstellungskomponente 750 einen Web-Browser. Für SAP R/3 ist die Darstellungskomponente 750 Bestandteil einer modifizierten Version einer Benutzeroberfläche, die von SAP R/3 verwendet wird. Für andere Anwendungen umfaßt die Darstellungskomponente 750 ein geeignetes Darstellungsprogramm. Mit anderen Worten: die spezifische Darstellungskomponente 750 wird in Abhängigkeit von einer bestimmten Client/Server-Anwendung verwendet.

Das intelligente Parsermodul 740 durchsucht die Analysedatenbank 630, um festzustellen, ob sie HTML enthält. Wenn dies der Fall ist, stellt das intelligente Parsermodul 740 fest, ob die HTML Datenfelder enthält, die es dem intelligenten Parsermodul 740 ermöglichen, den Wert der Felder auf eine nachfolgende Benutzer-Anforderung 134 hin auf sichere Weise zu verändern. Auf diese Weise ist der Analyst 210 in der Lage, Daten zu betrachten, die der Client 110 entsprechend dem dynamisch erzeugten Bildschirminhalt 120, so wie er während der Benutzersitzung 130 aufgetreten ist, eingegeben hat. In einer bevorzugten Ausführungsform der vorliegenden Erfindung implementiert das intelligente Parsermodul 740 diese Funktion aus Sicherheitsgründen nicht für Password-Felder.

Bei der beschriebenen Ausführungsform speichert die vorliegende Erfindung alle Anforderungen 134 und Antworten 132, die zwischen dem Client 110 und der Server-Umgebung 140 auftreten. Dies ist jedoch nicht in allen Client/Server-Umgebungen 100 erforderlich und vielleicht auch nicht erwünscht. In alternativen Ausführungsformen speichert der Ablaufkontrolldaten-Erfassungsfilter 150 nur dann Anforderungen 134 und Antworten 132 in dem Ablaufkontrollspeicher 160, wenn ein signifikantes Ereignis eintritt. Zum Beispiel werden in einer Ausführungsform Anforderungen 134 und Antworten 132 nur dann in dem Ablaufkontrollspeicher 160 gespeichert, wenn ein Kauf abgeschlossen wurde. In diesem Beispiel ist der Kauf ein signifikantes Ereignis. In einer anderen Ausführungsform der vorliegenden Erfindung können signifikante Ereignisse weiter untergliedert werden. Zum Beispiel wird ein Satz von Sitzungsdaten für solche Clienten 110 gespeichert, die Waren im Wert von 10 Millionen Dollar oder mehr kaufen, während ein anderer Satz von Sitzungsdaten für solche Clienten 110 gespeichert wird, die Waren in einem bestimmten Wert kaufen. Diese Ausführungsform der vorliegenden Erfindung eliminiert einen großen Teil der Daten aus dem Ablaufkontrollspeicher 160, die mit "Surfen" oder "Browsen" oder anderen nichtsignifikanten Ereignissen verknüpft sind und die andernfalls gespeichert würden. In anderen Ausführungsformen der vorliegenden Erfindung können solche zum "Surfen" oder "Browsen" gehörenden Daten jedoch nützlich sein, um bestimmte Verhaltensmuster (z.B. beim Einkaufen) festzustellen, und es kann erwünscht sein, diese Daten in dem Ablaufkontrollspeicher 160 zu speichern. Die spezifischen signifikanten Ereignisse, die das Speichern von Sitzungsdaten in dem Ablaufkontrollspeicher 160 auslösen, können von Anwendung zu Anwendung variieren.

Bei Ausführungsformen der vorliegenden Erfindung, die solche signifikanten Ereignisse als Kriterium für das Speichern von Sitzungsdaten benutzen, werden die Anforderungen 134 und die Antworten 132 vorzugsweise in einem temporären Speicher zwischengespeichert, bis das signifikante Ereignis eintritt. Sobald das signifikante Ereignis eintritt, werden die Anforderungen 134 und die Antworten 132 von dem temporären Speicher in den Ablaufkontrollspeicher 160 übertragen. Dieser Übertragungsprozeß von dem temporären Speicher in den Ablaufkontrollspeicher 160 wird als "Eintragen" der Anforderungen 134 und der Antworten 132 in den Ablaufkontrollspeicher 160 bezeichnet. Andere Methoden zum Eintragen der Sitzungsdaten (d.h. der Anforderungen 134 und der Antworten 132) in den Ablaufkontrollspeicher 160 stehen zur Verfügung. Zum Beispiel können Sitzungsdaten vor dem signifikanten Ereignis in dem Ablaufkontrollspeicher 160 gespeichert und als temporär oder vorläufig markiert oder auf andere Weise gekennzeichnet werden. Sobald das signifikante Ereignis eintritt, werden diese Daten als endgültig gekennzeichnet. Wenn das signifikante Ereignis nicht eintritt, werden sie anschließend gelöscht oder unlesbar gemacht.

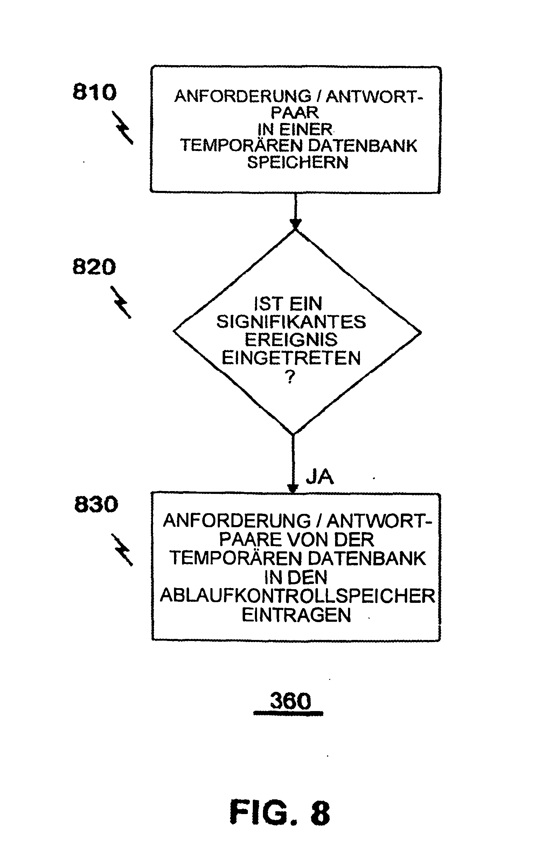

Vor diesem Hintergrund wird nun unter Bezug auf Fig. 8 der Speichervorgang 360 gemäß einer derartigen Ausführungsform der vorliegenden Erfindung beschrieben. In einem Schritt 810 speichert der Ablaufkontrolldaten-Erfassungsfilter 150 ein Anforderung/Antwort-Paar in einer temporären Datenbank oder einem temporären Speicher. In einem Entscheidungsschritt 820 stellt der Ablaufkontrolldaten-Erfassungsfilter 150 fest, ob ein signifikantes Ereignis eingetreten ist. Wenn dies der Fall ist, trägt der Ablaufkontrolldaten-Erfassungsfilter 150 in einem Schritt 830 die Anforderung/Antwort-Paare, die in der temporären Datenbank oder in dem temporären Speicher gespeichert sind, in den Ablaufkontrollspeicher 160 ein. Zu einem bestimmten Zeitpunkt löscht der Ablaufkontrolldaten-Erfassungsfilter 150 die temporäre Datenbank oder den temporären Speicher, wenn das Anforderung/Antwort-Paar nicht in die temporäre Datenbank oder den temporären Speicher eingetragen wurde.

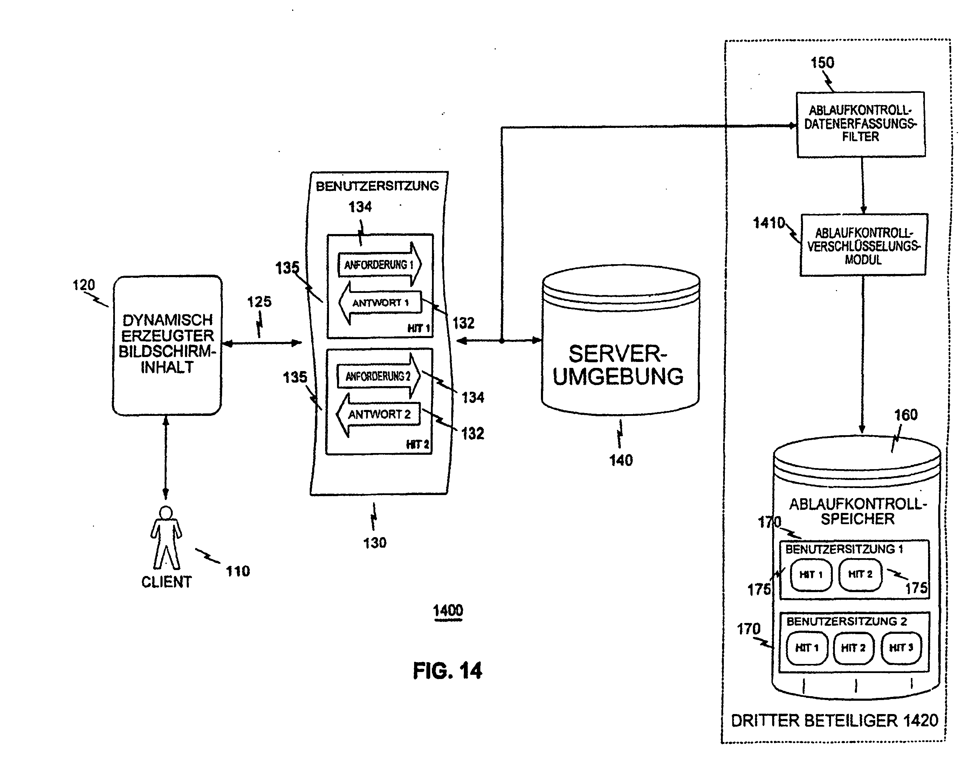

Eine Ausführungsform der vorliegenden Erfindung, bei der zum Schutz von Daten, die in dem Ablaufkontrollspeicher 160 gespeichert sind, eine Verschlüsselung verwendet wird, wird nun unter Bezug auf die Figuren 14 bis 18 beschrieben. Fig. 14 veranschaulicht eine Client/Server-Umgebung 1400, in der Verschlüsselung verwendet wird, um die in dem Ablaufkontrollspeicher 160 gespeicherten Daten zu schützen. Die Client/Server-Umgebung 1400 umfaßt zusätzlich zu den Elementen, die oben bezüglich der Client/Server-Umgebung 100 diskutiert wurden, ein Ablaufkontroll-Verschlüsselungsmodul 1410, und in einer bevorzugten Ausführungsform eine von einem vertrauenswürdigen Dritten kontrollierte Datenverarbeitungseinheit 1420, die als "dritter Beteiligter" bezeichnet wird.

In einer Ausführungsform der vorliegenden Erfindung beobachtet der Ablaufkontrolldaten-Erfassungsfilter 150 die Datenübertragungsverbindung 125, um Datentransferns (d.h. Anforderungen 134 und Antworten 132) zwischen dem Client 110 und der Server-Umgebung 140 zu erfassen. Wie zuvor erfaßt der Ablaufkontrolldaten-Erfassungsfilter 150 die Anforderung 134 von dem Client an die Server-Umgebung 140 und die Antwort 132 der Server-Umgebung 140 an den Client 110. Anstatt die erfaßte Anforderung 134 und die erfaßte Antwort 132 in dem Ablaufkontrollspeicher 160 zu speichern, übergibt der Ablaufkontrolldaten-Erfassungsfilter 150 die erfaßte Anforderung 134 und die erfaßte Antwort 132 an das Ablaufkontroll-Verschlüsselungsmodul 1410, welches die erfaßte Anforderung 134 und die erfaßte Antwort 132 verschlüsselt, um die Vertraulichkeit von Datentransfers zu schützen und um während der Benutzersitzung 130 zwischen dem Client 110 und der Server-Umgebung 140 für Sicherheit zu sorgen. Das Ablaufkontroll-Verschlüsselungsmodul 1410 speichert die verschlüsselte Anforderung 134 und verschlüsselte Antwort 132 in dem Ablaufkontrollspeicher 160 wie oben beschrieben.

In einer bevorzugten Ausführungsform der vorliegenden Erfindung wird die Verschlüsselung so durchgeführt, daß weder der Client 110 noch die Server-Umgebung 140 verschlüsselte Anforderungen 134 und verschlüsselte Antworten 132 ohne Einwilligung oder Mitwirkung des jeweils anderen entschlüsseln können. Diese Ausführungsform sorgt nicht nur für Vertraulichkeit und Sicherheit der Kommunikation zwischen dem Client 110 und der Server-Umgebung 140, sondern sie stellt auch einen Mechanismus zur Verfügung, durch den sowohl der Client 110 als auch die Server-Umgebung 140 verifizieren können, daß ein bestimmter Ablauf von Ereignissen oder Transaktionen während einer bestimmten Benutzersitzung 130 stattgefunden hat. Diese Merkmale werden weiter unten detaillierter diskutiert.

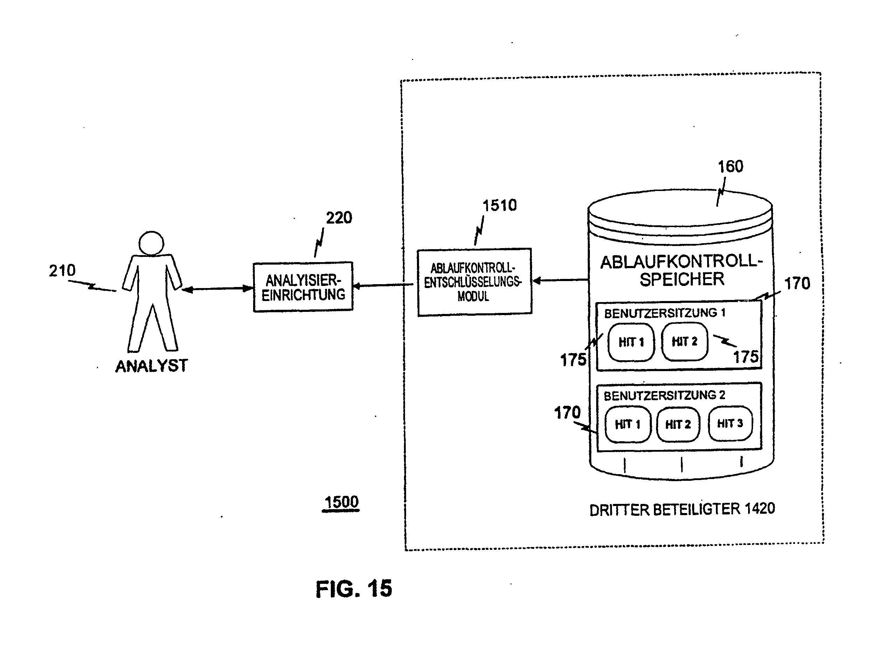

Anhand von Fig. 15 wird nun der Zugriff auf die verschlüsselten Anforderungen 134 und auf die verschlüsselten Antworten 132 diskutiert. Um auf die verschlüsselten Anforderungen 134 und verschlüsselten Antworten 132 in dem Ablaufkontrollspeicher 160 zugreifen zu können, muß die Analysiereinrichtung 220 bei der Analyse einer Benutzersitzung 170 zunächst auf ein Ablaufkontroll-Entschlüsselungsmodul 1510 zugreifen. Insbesondere muß der Analyst 210 einen Entschlüsselungsschlüssel ermitteln oder übermittelt bekommen, der dazu benutzt werden kann, die Benutzersitzung 170 zu entschlüsseln. Wenn der Entschlüsselungs-Schlüssel wiederhergestellt ist, kann das Ablaufkontroll-Entschlüsselungsmodul 1510 die verschlüsselte Benutzersitzung 170 entschlüsseln, so daß darin enthaltene Anforderungen 134 und Antworten 132 wie oben diskutiert analysiert werden können. Wie beschrieben, sind in einigen Ausführungsformen der vorliegenden Erfindung der Entschlüsselungs-Schlüssel und der Verschlüsselungs-Schlüssel gleich. Daher können diese Begriffe oftmals gegeneinander ausgetauscht werden. Die vorliegende Erfindung bezieht sich jedoch auch auf Ausführungsformen, in denen der Verschlüsselungs-Schlüssel und der Entschlüsselungs-Schlüssel nicht gleich sind.

Verschiedene Verschlüsselungs-/Entschlüsselungs-Systeme sind entwickelt worden und in der Verschlüsselungstechnik bekannt. Diese Systeme können verwendet werden, um Verschlüsselungs-Schlüssel und/oder Entschlüsselungs-Schlüssel zum Gebrauch in der vorliegenden Erfindung bereitzustellen. Bevorzugt gewährleistet das Verschlüsselungsverfahren sogenannte "Non-Repudiation", d.h. es stellt sicher, daß der Absender die Tatsache des Versands einer Nachricht, die bei dem Empfänger angekommen ist, nicht in Frage stellen kann. Die Quelle der Nachricht ist dabei nachweisbar.

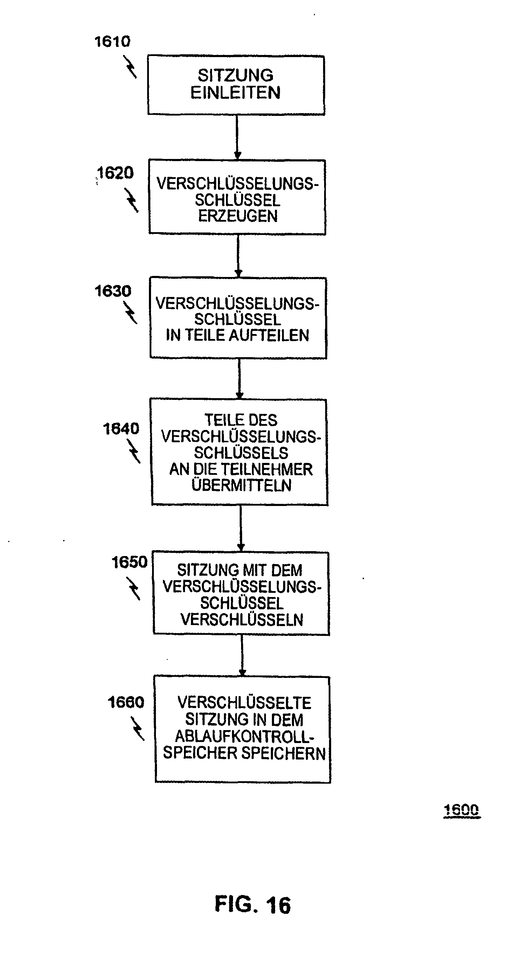

Fig. 16 veranschaulicht die Operation 1600 beim Verschlüsseln einer Benutzersitzung 130 gemäß einer Ausführungsform der vorliegenden Erfindung. In einem Schritt 1610 leitet ein Client 110 eine Sitzung 130 mit einer Server-Umgebung 140 ein. Dies wird z.B. in einer Internet-Anwendung dadurch erreicht, daß der Client 110 zunächst auf eine bestimmte URL zugreift, die mit der Server-Umgebung verknüpft ist. Typischerweise schließt dieser Zugriff eine erste Anforderung 134 von dem Client 110 an die Server-Umgebung 140 ein. Der Ablaufkontrolldaten-Erfassungsfilter 150 stellt fest, daß die erste Anforderung 134 nicht zu einer anderen existierenden Benutzersitzung 130 gehört, und teilt dem Ablaufkontroll-Verschlüsselungsmodul 1410 mit, daß eine neue Benutzersitzung 130 eingeleitet worden ist.

Wenn eine neue Benutzersitzung 130 eingeleitet worden ist, erzeugt das Ablaufkontroll-Verschlüsselungsmodul 1410 in einem Schritt 1620 einen Verschlüsselungs-Schlüssel gemäß einem der verschiedenen bekannten Verschlüsselungsverfahren. In einem Schritt 1630 wird der Verschlüsselungs-Schlüssel in zwei oder mehr Teile aufgeteilt. Dies wird wiederum mit Hilfe verschiedener bekannter Verfahren durchgeführt, so daß der Verschlüsselungs-Schlüssel nur aus allen Teilen, oder in manchen Fällen aus einer Mehrheit der Teile, wiederhergestellt werden kann. Z.B. umfaßt der Verschlüsselungs-Schlüssel in einer Ausführungsform der vorliegenden Erfindung einen String, der in zwei oder mehr String-Teile aufgegliedert werden kann. Bei dieser Ausführungsform können die String-Teile wieder zusammengesetzt werden, um den Verschlüsselungs-Schlüssel wiederherzustellen. In einer anderen Ausführungsform enthält der Verschlüsselungs-Schlüssel einen Zahlenwert, aus dem die Teile berechnet werden können. In dieser Ausführungsform kann der Verschlüsselungs-Schlüssel aus den Teilen berechnet und dadurch wiederhergestellt werden. In einigen Ausführungsformen der vorliegenden Erfindung werden zuerst die Teile des Verschlüsselungs-Schlüssels bestimmt, und danach wird aus den Teilen der Verschlüsselungs-Schlüssel bestimmt. Es können aber auch andere Methoden benutzt werden.

In einem Schritt 1640 werden die Teile des Verschlüsselungs-Schlüssels an die Teilnehmer der Benutzersitzung 130 übermittelt. In einer Ausführungsform der vorliegenden Erfindung wird ein erster Teil des Verschlüsselungs-Schlüssels an den Client 110 und ein zweiter Teil an die Server-Umgebung 140 übermittelt. In Ausführungsformen der vorliegenden Erfindung, in denen eine Vielzahl von Clienten 110 an einer Benutzersitzung 130 mit der Server-Umgebung 140 teilnehmen, wird der Verschlüsselungs-Schlüssel in so viele Teile aufgespalten, wie es Teilnehmer der Benutzersitzung 130 einschließlich der Server-Umgebung 140 gibt, und entsprechend übermittelt, so daß an jeden Teilnehmer ein Teil des Verschlüsselungs-Schlüssels geliefert.

Die Teile des Verschlüsselungs-Schlüssels können auf mehrere verschiedene Weisen übermittelt werden. In einer Ausführungsform werden die Teile des Verschlüsselungs-Schlüssels durch einen sicheren oder vertraulichen Kommunikationskanal elektronisch an die Teilnehmer übermittelt. In einer anderen Ausführungsform werden die Teile des Verschlüsselungs-Schlüssels per Post oder über andere derartige Kommunikationswege physisch an die Teilnehmer versandt. Es gibt noch verschiedene andere Verfahren zur Verteilung der Teile des Verschlüsselungs-Schlüssels.

In einer Ausführungsform der vorliegenden Erfindung beliefert das Ablaufkontroll-Verschlüsselungsmodul 1410 jeden Teilnehmer nicht nur mit dem Teil des Verschlüsselungs-Schlüssels, sondern außerdem mit Identifizierungs-Informationen, mit denen eine bestimmte verschlüsselte Benutzersitzung 170, die zu dem jeweiligen Teil des Verschlüsselungs-Schlüssels gehört, lokalisiert werden kann. In einer Ausführungsform genügt der Verschlüsselungs-schlüssel selbst, um die verschlüsselte Benutzersitzung 170, zu der er gehört, zu identifizieren. In einer anderen Ausführungsform der Erfindung wird zusammen mit dem jeweiligen Teil des Verschlüsselungs-Schlüssels ein Benutzersitzungs-Identifizierer, der die verschlüsselte Benutzersitzung 170 identifiziert, an den Teilnehmer geliefert. In wieder anderen Ausführungsformen können Informationen, die in Internet-Protokollen (z.B. in Form eines "Cookie") verwendet werden, dazu benutzt werden, die verschlüsselte Benutzersitzung 170 zu identifizieren. Verschiedene andere Methoden zum Identifizieren der verschlüsselten Benutzersitzung 170 sind verfügbar.

In einem Schritt 1650 verschlüsselt das Ablaufkontroll-Verschlüsselungsmodul 1410 die Benutzersitzung 130 unter Verwendung des Verschlüsselungs-Schlüssels, der in dem Schritt 1620 erzeugt wurde. In einem Schritt 1660 wird die Benutzersitzung 170 in dem Ablaufkontrollspeicher 160 gespeichert. In einer Ausführungsform der vorliegenden Erfindung wird die Benutzersitzung 170 zusammen mit Identifizierungs-Informationen in dem Ablaufkontrollspeicher 160 gespeichert, so daß die verschlüsselte Benutzersitzung, wie oben diskutiert, lokalisiert werden kann.

Das Übermitteln von Teilen des Verschlüsselungs-Schlüssels an die verschiedenen Teilnehmer der Benutzersitzung 130, wie oben unter Bezug auf Schritt 1640 diskutiert, hat den Zweck, sicherzustellen, daß kein einzelner Teilnehmer ohne Zustimmung oder Kenntnis der anderen Teilnehmer auf die verschlüsselte Benutzersitzung 170 zugreifen kann. Insofern funktioniert die Erfindung ähnlich wie ein Bankschließfach. Um auf den Inhalt des Bankschließfaches zugreifen zu können, sind zwei Schlüssel notwendig: Einer befindet sich im Besitz der Bank und einer befindet sich im Besitz des Eigentümers des Inhaltes des Bankschließfaches. Weder die Bank noch der Eigentümer allein können auf den Inhalt des Bankschließfaches zugreifen; die Kooperation beider ist erforderlich.

In einer Ausführungsform der vorliegenden Erfindung haben sowohl der Client 110 als auch die Server-Umgebung 140 jeweils ein Paar von Schlüsseln, das aus einem öffentlichen und einem privaten Schlüssel besteht. In dieser Ausführungsform werden jeweils die öffentlichen Schlüssel (die allgemein bekannt sind und daher "öffentlich" genannt werden) dazu benutzt, die Benutzersitzung 130 individuell und sukzessiv zu verschlüsseln. Z.B. wird eine Anforderung 134 zuerst mit einem zu dem Client 110 gehörenden öffentlichen Schlüssel verschlüsselt. Die resultierende verschlüsselte Information wird durch einen zu der Server-Umgebung 140 gehörenden öffentlichen Schlüssel verschlüsselt. In dieser Ausführungsform werden die privaten Schlüssel sowohl des Client 110 als auch der Server-Umgebung 140 dazu verwendet, die Anforderung 134 wiederherzustellen.

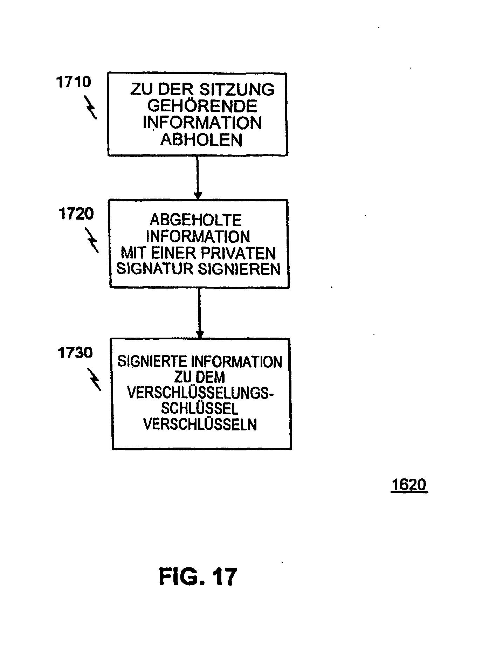

Fig. 17 veranschaulicht den Schritt 1620 gemäß einer bevorzugten Ausführungsform der vorliegenden Erfindung detaillierter. Insbesondere zeigt Fig. 17, wie ein Verschlüsselungs-Schlüssel erzeugt werden kann. Wenn eine Benutzersitzung 130 eingeleitet worden ist, holt das Ablaufkontroll-Verschlüsselungsmodul 1410 in einem Schritt 1710 Information ab, die zu der Benutzersitzung 130 gehört. Diese Information hängt von der Anwendung ab. Sie kann beispielsweise eine IP-Adresse für den Client 110 und eine IP-Adresse für die Server-Umgebung 140, eine Datums- und/oder Zeitkennzeichnung der Anforderung 134, einen Benutzernamen und/oder andere Informationen, die mit der Benutzersitzung 130 verknüpft sind, umfassen. Diese Informationen werden abgeholt und zu einem String zusammengesetzt, der hier als "abgeholter Informations-String" bezeichnet wird.

In einem Schritt 1720 signiert das Ablaufkontroll-Verschlüsselungsmodul 1410 den abgeholten Informations-String gemäß bekannten Verfahren mit einer privaten Signatur. In einem Schritt 1730 wird der abgeholte Informations-String zu dem endgültigen Verschlüsselungs-Schlüssel verschlüsselt. Die Reihenfolge, in der der Schritt 1720 und der Schritt 1730 ausgeführt werden, kann umgekehrt werden. Der endgültige Verschlüsselungs-Schlüssel, der in der bevorzugten Ausführungsform der vorliegenden Erfindung ein String ist, wird dazu verwendet, die Benutzersitzung 130 zu verschlüsseln.

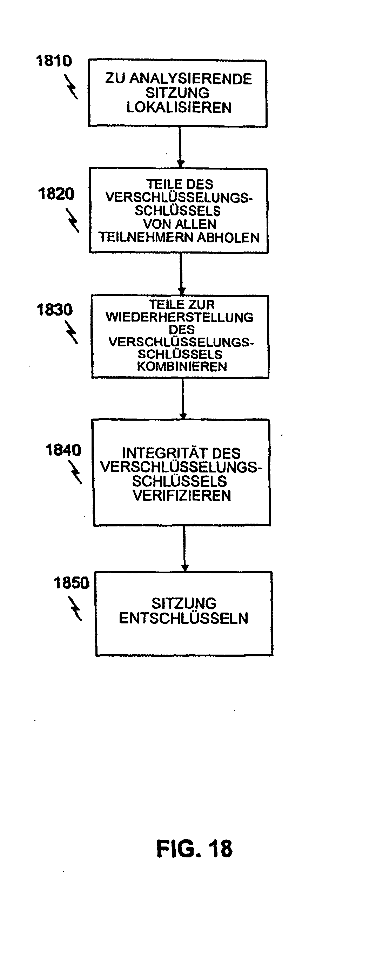

Die Arbeitsweise des Ablaufkontroll-Entschlüsselungsmoduls 1510 wird unter Bezug auf Fig. 18 beschrieben. In einem Schritt 1810 lokalisiert das Ablaufkontroll-Entschlüsselungsmodul 1510 die Benutzersitzung 170, die der Analyst 210 analysieren möchte. In einer Ausführungsform gibt der Analyst 210 in den Ablaufkontroll-Entschlüsselungsmodul 1510 Identifizierungs-Information ein, die es dem Ablaufkontroll-Entschlüsselungsmodul 1510 ermöglicht, die verschlüsselte Benutzersitzung 170, die der Analyst 210 analysieren möchte, zu lokalisieren. In einer anderen Ausführungsform kann die Identifizierungs-Information Teil des Verschlüsselungs-Schlüssels selbst sein. Andere Ausführungsformen verwenden andere Identifizierungs-Informationen, wie oben diskutiert wurde.

In einem Schritt 1820 holt das Ablaufkontroll-Entschlüsselungsmodul 1510 die Teile des Verschlüsselungs-Schlüssels von allen Teilnehmern, die zu der Benutzersitzung 170 gehören, ab. Wie oben diskutiert wurde, muß das Ablaufkontroll-Entschlüsselungsmodul 1510 den jeweiligen Teil des Entschlüsselungs-Schlüssels von jedem der Teilnehmer (oder, in einigen Ausführungsformen, von einer Mehrheit der Teilnehmer) abholen.

In einem Schritt 1830 werden die Teile des Verschlüsselungs-Schlüssels kombiniert, um ihn wiederherzustellen. Wie oben diskutiert wurde, werden die Teile in Ausführungsformen, die einen String zur Definition des Verschlüsselungs-Schlüssels verwenden, aneinandergereiht, um den Verschlüsselungs-Schlüssel wiederherzustellen. In Ausführungsformen, die einen Zahlenwert als Verschlüsselungs-Schlüssel benutzen, wird der Verschlüsselungs-Schlüssel aus den Teilen berechnet.

In einem Schritt 1840 verifiziert das Ablaufkontroll-Entschlüsselungsmodul 1510 unter Verwendung verschiedener bekannter Verfahren die Integrität des Verschlüsselungs-Schlüssels und der verschlüsselten Benutzersitzung 170, um sicherzustellen, daß keine Fälschung stattgefunden hat.

In einem Schritt 1850 verwendet das Ablaufkontroll-Entschlüsselungsmodul 1410 den Entschlüsselungs-Schlüssel, um die verschlüsselte Benutzersitzung 170 zu entschlüsseln. Wenn sie entschlüsselt ist, kann der Analyst 210 die Anforderungen 134 und die Antworten 132 wie oben diskutiert analysieren.

Anstelle der Verschlüsselung einer vollständigen Benutzersitzung 130 in der oben beschriebenen Weise, oder zusätzlich hierzu, können verschiedene Ausführungsformen der vorliegenden Erfindung dazu verwendet werden, bestimmte Ereignisse, die während der Benutzersitzung 130 eingetreten sind, zu verschlüsseln und zu speichern. Diese Ausführungsformen der vorliegenden Erfindung werden im Zusammenhang mit der Ereignis-Verifikation verwendet. Die Ereignis-Verifikation stellt eine sichere und überprüfbare Methode dar, um zu beweisen, daß ein bestimmtes Ereignis während der Benutzersitzung 130 eingetreten ist. Z.B. kann es bei einem elektronischen Kauf von Waren für beide Seiten der Kauf-Transaktion nützlich sein zu beweisen, daß die Transaktion stattgefunden hat. Durch Verschlüsseln und Speichern der Anforderung 134, die die Aussage "ich bin einverstanden, X Produkte zu einem bestimmten Preis D zu kaufen" enthält, kann jede Seite später beweisen, daß die Transaktion stattgefunden hat, nachdem dem Ablaufkontroll-Entschlüsselungsmodul 1510 ein geeigneter Teil des Verschlüsselungs-Schlüssels übermittelt wurde. Ereignis-Verifikation kann z.B. bei dem oben diskutierten Verschlüsseln und Speichern von signifikanten Ereignissen nützlich sein.

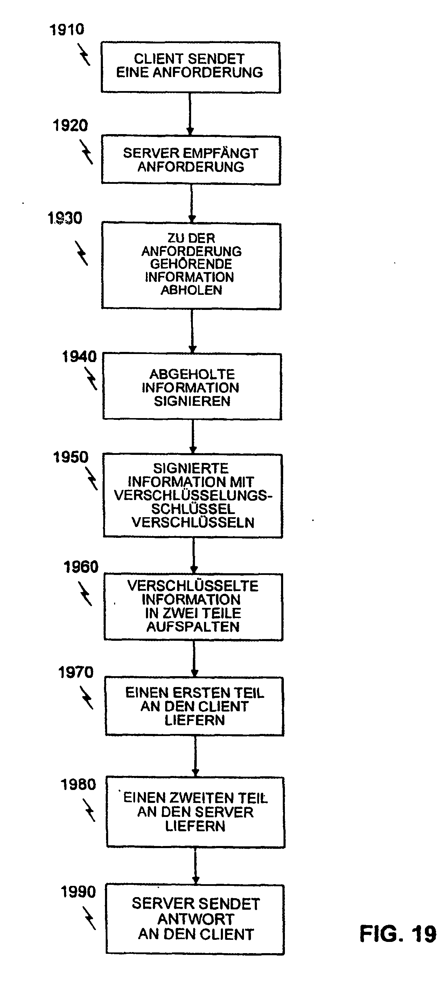

Die Vorgehensweise bei der Ereignis-Verifikation gemäß einer bevorzugten Ausführungsform der vorliegenden Erfindung wird nun unter Bezug auf Fig. 19 beschrieben. In einem Schritt 1910 sendet ein Client 110 eine Anforderung 134 an eine Server-Umgebung 140. In einer Ausführungsform enthält die Anforderung 134 ein signifikantes Ereignis, z.B. "ich bin mit dem Kauf einverstanden". In anderen Ausführungsformen kann jede Anforderung 134 der Benutzersitzung 130 in der beschriebenen Weise verarbeitet werden.

In einem Schritt 1920 empfängt die Server-Umgebung 140 (in Figur 19 als "SERVER" bezeichnet) die Anforderung 134. In einem Schritt 1930 holt die Server-Umgebung 140 zu der empfangenen Anforderung 134 gehörende Information ab, wie oben unter Bezug auf Schritt 1710 beschrieben. In einem Schritt 1940 signiert die Server-Umgebung 140 die abgeholte Information, wie oben unter Bezug auf Schritt 1720 beschrieben. Durch Signieren der gesammelten Information wird der Empfang der Anforderung 134 durch die Server-Umgebung 140 bestätigt, wodurch nachfolgende Fälschungsversuche von dritter Seite verhindert werden.

In einem Schritt 1950 verschlüsselt die Server-Umgebung 140 die signierte Information, wie oben unter Bezug auf Schritt 1730 beschrieben wurde, um dadurch einen Verschlüsselungs-Schlüssel zu erzeugen. In einem Schritt 1960 spaltet die Server-Umgebung den Schlüssel in zwei (oder mehr) Teile auf, wie oben beschrieben. In einem Schritt 1970 liefert die Server-Umgebung 140 einen ersten Teil des Schlüssels an den Client 110. In einem Schritt 1980 liefert die Server-Umgebung 140 einen zweiten Teil des Schlüssels an den Ablaufkontrollspeicher 160, um das Ereignis für ihre eigenen Zwecke aufzuzeichnen. In einer anderen Ausführungsform der vorliegenden Erfindung speichert die Server-Umgebung sowohl den ersten als auch den zweiten Teil der verschlüsselten Information in dem Ablaufkontrollspeicher 160. In einem Schritt 1990 sendet die Server-Umgebung 140 als Reaktion auf die Anforderung 134 eine Antwort 132 an den Client 110, wie oben beschrieben.

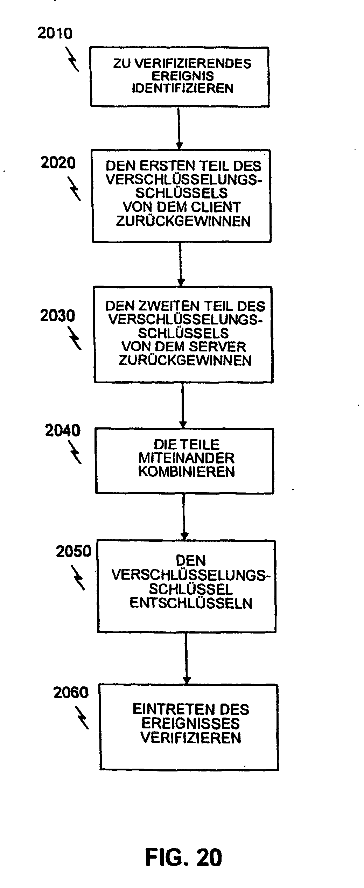

Die Vorgehensweise bei der Ereignis-Verifikation wird nun unter Bezug auf Fig. 20 weiter beschrieben. In einem Schritt 2010 identifiziert die Server-Umgebung 140 ein zu verifizierendes Ereignis. Z.B. kann ein Client 110 eine Bestätigung dafür wünschen, daß er eine Bestellung an einem bestimmten Tag vorgenommen hat. Die Server-Umgebung 140 durchsucht den Ablaufkontrollspeicher 160 auf Basis von Identifizierungs-Information, wie z.B. eine IP-Adresse, ein Datum, eine Transaktionsart oder eine andere derartige Identifizierungs-Information, wie sie oben diskutiert wurde. Die Identifizierungs-Information kann alternativ auch der erste Teil des Verschlüsselungs-Schlüssels sein, der, wie oben diskutiert, in dem Schritt 1970 an den Client 110 geliefert wurde.

In einem Schritt 2020 gewinnt die Server-Umgebung 140 den ersten Teil des Verschlüsselungs-Schlüssels von dem Client 110 zurück. In einem Schritt 2030 gewinnt die Server-Umgebung 140 den zweiten Teil des Verschlüsselungs-Schlüssels aus dem Ablaufkontrollspeicher 160 zurück. In einem Schritt 2040 kombiniert die Server-Umgebung 140 die beiden Teile des Verschlüsselungs-Schlüssels miteinander. In einem Schritt 2050 entschlüsselt die Server-Umgebung 140 den Verschlüsselungs-Schlüssel, um die signierte Information zu erhalten. In einem Schritt 2060 verwendet die Server-Umgebung 140 die signierte Information, um zu verifizieren, daß ein bestimmtes Ereignis eingetreten ist, nämlich, daß der Client 110 eine bestimmte Anforderung 134 gesendet hat.

Die Figuren 14 bis 20 wurden oben im Zusammenhang mit der Server-Umgebung 140 beschrieben, die verschiedene mit der Erzeugung von Schlüsseln, mit der Verschlüsselung von Information, mit der Entschlüsselung von Information usw. verknüpfte Operationen ausführt. In diesem Zusammenhang wird vorausgesetzt, daß die Server-Umgebung 140 vertrauenswürdig ist. Mit anderen Worten, die Server-Umgebung 140 führt keine Aktion oder Operation aus, die die beabsichtigte Funktion der vorliegenden Erfindung verfälschen könnte (z.B. Ereignisse fälschen, unkorrekte Teile des Verschlüsselungs-Schlüssels liefern, falsche Information in Bezug auf Ereignisse liefern usw.).

Diese Voraussetzung trifft jedoch möglicherweise für Server-Umgebungen 140 nicht zu. Z.B. kann es sein, daß Clienten 110 nicht darauf vertrauen, daß die Server-Umgebung in allen Situationen integer und korrekt arbeitet. In manchen Ausführungsformen der vorliegenden Erfindung kann ein unabhängiger, vertrauenswürdiger dritter Beteiligter (wie z.B. der in Fig. 14 und 15 dargstellte dritte Beteiligte 1420) verwendet werden. In diesen Ausführungsformen der vorliegenden Erfindung werden insbesondere die Operationen und die Funktionen des Ablaufkontroll-Verschlüsselungsmoduls 1410 und des Ablaufkontroll-Entschlüsselungsmoduls 1510 durch den dritten Beteiligten 1420 ausgeführt. Z.B. kann der dritte Beteiligte 1420 folgende Operationen ausführen: Erzeugen eines Verschlüsselungs-Schlüssels, Aufgliedern des Verschlüsselungs-Schlüssels in Teile, Übermitteln der Teile des Verschlüsselungs-Schlüssels an die Teilnehmer und Verschlüsseln der Benutzersitzung (Schritte 1620 bis 1650 in Fig. 16); Abholen der Teile des Verschlüsselungs-Schlüssels von den Teilnehmern, Kombinieren der Teile zum Wiederherstellen des Verschlüsselungs-Schlüssels, Verifizieren der Integrität des Verschlüsselungs-Schlüssels und der verschlüsselten Sitzung und Entschlüsseln des Verschlüsselungs-Schlüssels (Schritte 1820 bis 1850 in Fig. 18); Verschlüsseln der signierten Information mit einem Verschlüsselungs-Schlüssel, Aufspalten des Verschlüsselungs-Schlüssels in zwei Teile, Senden eines ersten Teils an den Client (Schritte 1950 bis 1970 in Fig. 19); und Zurückgewinnen der Teile des Verschlüsselungs-Schlüssels von dem Client und der Server-Umgebung, Kombinieren der Teile zum Wiederherstellen des Verschlüsselungs-Schlüssels, Entschlüsseln des Verschlüsselungs-Schlüssels und Verifizieren, daß ein bestimmtes Ereignis eingetreten ist (Schritte 2020 bis 2060 in Fig. 20). Diese Liste soll die Schritte, die von dem dritten Beteiligten 1420 ausgeführt werden können, nicht vollständig aufzählen. Vielmehr ist die Liste beispielhaft für die Schritte, die der dritte Beteiligte 1420 gemäß der vorliegenden Erfindung ausführen kann. Sie sind beispielshaft für die Schritte, deren Ausführung ein Client 110 einer Server-Umgebung 140 möglicherweise nicht anvertrauen möchte, insbesondere in Situationen, in denen er der Server-Umgebung 140 ablehnend oder potentiell ablehnend gegenüber steht. In jedem Fall erkennt man, wie die vorliegende Erfindung durch Einbeziehung eines dritten Beteiligten 1420 modifiziert werden kann.

Ein Vorteil bei der Verwendung des dritten Beteiligten 1420 wird erreicht, indem man den dritten Beteiligten 1420 alle Teile des Verschlüsselungs-Schlüssels und/oder den Verschlüsselungs-Schlüssel insgesamt speichern läßt. Auf diese Weise kann der dritte Beteiligte 1420 immer die verschlüsselte Sitzung 170 oder Teile davon wiederherstellen, falls die Teile des Verschlüsselungs-Schlüssels, die an den Client 110 oder an die Server-Umgebung 140 geliefert wurden, verlorengehen, oder wenn einer der Teilnehmer die Zusammenarbeit verweigert.

Die Beschreibung der vorliegenden Erfindung geht weiterhin davon aus, daß Anforderungen 134 immer einem bestimmten Client 110 zugeordnet werden können. Tatsächlich können Anforderungen 134 während des eigentlichen Betriebes aber nur einem bestimmten Computer oder Terminal definitiv zugeordnet werden. Insbesondere können Anforderungen 134 in einer IP-Umgebung als von einer bestimmten IP-Adresse stammend identifiziert werden, die eindeutig zu einem bestimmten Computer gehört, während Anforderungen 134 in einer dedizierten Umgebung als von einem bestimmten Terminal stammend identifiziert werden können. Daher sind zusätzliche Sicherheitsprotokolle erforderlich, die den Zugriff auf einen bestimmten Computer oder ein bestimmtes Terminal effektiv beschränken, wie z.B. Paßwörter, Sicherheits-Chipkarten, Scans eines Fingerabdruckes, Scans der Retina usw., so daß eine Anforderung 134, die von dem Computer oder dem Terminal aus erfolgt, unzweifelhaft einem bestimmten Client 110 zugeordnet werden kann.

Nachdem die Erfindung detailliert und unter Bezug auf spezifische Ausführungsformen beschrieben worden ist, ist es für einen Fachmann offensichtlich, daß verschiedene Änderungen und Modifikationen vorgenommen werden können, ohne den Schutzbereich der Erfindung zu verlassen. Die vorliegende Erfindung bezieht sich daher auch auf Modifikationen und Abwandlungen der Erfindung, soweit diese Modifikationen und Abwandlungen innerhalb des Schutzbereichs der beigefügten Ansprüche und ihrer Äquivalente liegen.

## Patentansprüche

1. Verfahren zum Speichern von Mitteilungen während einer Benutzersitzung (130), insbesondere zum Verifizieren eines während der Benutzersitzung (130) stattfindenden Ereignisses, in einer Computer-Umgebung, die einen Client (110) und einen mit ihm über eine Datenübertragungsverbindung (125) verbundenen Server (140) aufweist, wobei die Benutzersitzung als Mitteilung wenigstens eine Anforderung (134) und eine Antwort (132) zwischen dem Client (110) und dem Server (140) umfaßt und wobei das Verfahren folgenden Schritt umfaßt:
Empfangen einer Anforderung (134) des Client (110) in dem Server (140);
**dadurch gekennzeichnet, daß**
die Datenübertragungsverbindung (125) von einem Ablaufkontrolldaten-Erfassungsfilter (150) überwacht wird, um die Anforderung (134) und die Antwort (132) zu empfangen,
die Anforderung (134) und die Antwort (132) von dem Ablaufkontrolldaten-Erfassungsfilter (150) nach Empfang an ein Ablaufkontroll-Verschlüsselungemodul (1410) übergeben wird, von dem die Anforderung (134) und die Antwort (132) mit einem von ihm erzeugten Verschlüsselungs-Schlüssel verschlüsselt und in einem Ablaufkontrollspeicher (160) gespeichert werden,
der Verschlüsselungs-Schlüssel in Abhängigkeit von dem Client (110) und der Anforderung erzeugt wird,
der Verschlüsselungs-Schlüssel von dem Ablaufkontroll-Verschlüsselungsmodul in zwei oder mehr Teile aufgeteilt wird, ein erster Teil des Verschlüsselungs-Schlüssels an den Client (110) und ein zweiter Teil des Verschlüsselungs-Schlüssels an den Server (140) übermittelt wird,
von einem Ablaufkontroll-Entschlüsselungsmodul (1510) die Teile des Verschlüsselungs-Schlüssels von dem Client (110) und dem Server (140) abgeholt und kombiniert werden, um den Verschlüsselungs-Schlüssel wieder herzustellen, und
der Verschlüsselungs-Schlüssel als Entschlüsselungs-Schlüssel verwendet wird, um die verschlüsselt gespeicherten Mitteilungen zu entschlüsseln.

2. Verfahren nach Anspruch 1, **dadurch gekennzeichnet, daß** in dem Ablaufkontrollspeicher (160) mit der Anforderung (134) von dem Client (110) auch zu der Computer-Umgebung gehörende Umgebungsdaten gespeichert werden.

3. Verfahren nach Anspruch 1 oder 2, **dadurch gekennzeichnet, daß** in dem Ablaufkontrollspeicher (160) mit der Antwort auf die Anforderung (134) auch zu der Computer-Umgebung gehörende Umgebungsdaten gespeichert werden.

4. Verfahren nach einem der vorhergehenden Ansprüche, **dadurch gekennzeichnet, daß** verifiziert wird, daß die Benutzersitzung (130) nicht gefälscht worden ist.

5. Verfahren nach einem der vorhergehenden Ansprüche, **dadurch gekennzeichnet, daß** die Mitteilungen auf dem Server (140) wiederhergestellt werden.

6. Verfahren nach einem der vorhergehenden Ansprüche, **dadurch gekennzeichnet, daß** die Computer-Umgebung mehrere Clients (110) aufweist, wobei die Benutzersitzung als Mitteilungen Anforderungen und Antworten zwischen den Clients (110) und dem Server (140) umfaßt und der Verschlüsselungs-Schlüssel in so viele Teile aufgespalten wird, wie es Teilnehmer der Benutzersitzung (130) einschließlich des Servers (140) gibt, und an jeden Teilnehmer ein Teil des Verschlüsselungs-Schlüssels geliefert wird.

7. Verfahren nach Anspruch 6, **dadurch gekennzeichnet, daß** jeder Client (110) und der Server (140) mit Identifikationsinformation versehen wird, um die Clients (110) und den Server (140) zu lokalisieren.

8. Verfahren nach Anspruch 6, **dadurch gekennzeichnet, daß** die Mitteilungen der Benutzersitzung (130) unter Verwendung der Teile des Verschlüsselungs-Schlüssels, die von den Clients (110) kommen, und des Teils des Verschlüsselungs-Schlüssels, der von dem Server (140) kommt, entschlüsselt werden und die Mitteilungen wiederhergestellt werden.

9. Verfahren nach einem der vorhergehenden Ansprüche, **dadurch gekennzeichnet, daß** der Schritt des Verschlüsselns der Antwort mit dem Verschlüsselungs-Schlüssel durch einen dritten Beteiligten (1420) ausgeführt wird.

10. Verfahren nach einem der vorhergehenden Ansprüche, wobei die Schritte des Verschlüsselns der Anforderung mit einem Verschlüsseluhgs-Schlüssel, des Entschlüsselns der verschlüsselten Anforderung und, sofern anwendbar, die Schritte des Verschlüsselns der Antwort, des Speicherns der Anforderung und des Speicherns der Antwort durch einen dritten Beteiligten (1420) ausgeführt werden.

11. Verfahren nach Anspruch 10 mit folgenden weiteren Schritten:
Übermitteln eines ersten Teils des Verschlüsselungs-Schlüssels an den Client (110) durch den dritten Beteiligten (1420);
Übermitteln eines zweiten Teils des Verschlüsselungs-Schlüssels an den Server (140) durch den dritten Beteiligten (1420);
Abholen von zumindest dem ersten Teil oder dem zweiten Teil durch den dritten Beteiligten (1420);
Wiederherstellen des Verschlüsselungs-Schlüssels durch den dritten Beteiligten (1420); unter Verwendung zumindest des abgeholten Teils.

12. Verfahren nach Anspruch 10 oder 11, bei dem der erste Teil des Verschlüsselungs-Schlüssels und der zweite Teil des Verschlüsselungs-Schlüssels bei dem dritten Beteiligten (1420) gespeichert werden.

13. Verfahren nach einem der Ansprüche 10 bis 12, bei dem der Schritt des Wiederherstellens des Verschlüsselungs-Schlüssels folgende Schritte einschließt:
Abholen des an den Client (110) übermittelten Teils des Verschlüsselungs-Schlüssels;
Abholen des zweiten Teils des Verschlüsselungs-Schlüssels von dem Server (140); und
Ermitteln des Verschlüsselungs-Schlüssels aus dem von dem Client (110) geholten Teil des Verschlüsselungs-Schlüssels und aus dem zweiten Teil des Verschlüsselungs-Schlüssels von dem Server (140).

14. Verfahren nach Anspruch 13, bei dem in dem Schritt des Ermittelns des Verschlüsselungs-Schlüssels der Verschlüsselungs-Schlüssel aus dem von dem Client (110) abgeholten Teil und aus dem zweiten Teil des. Verschlüsselungs-Schlüssels von dem Server (140) berechnet wird.

15. Verfahren nach Anspruch 13, bei dem in dem Schritt des Ermittelns des Verschlüsselungs-Schlüssels der von dem Client (110) geholte Teil des Verachlüsselungs-Schlüssels an den zweiten Teil des Verschlüsselungs-Schlüssels von dem Server (140) angehängt wird, um aus beiden Teilen zusammen den Verschlüsselungs-Schlüssel neu zu bilden.

16. System zum Speichern von Mitteilungen während einer Benutzersitzung (130), insbesondere zum Verifizieren eines während der Benutzersitzung (130) stattfindenden Ereignisses, in einer Computer-Umgebung, die einen Client (110) und einen mit ihm über eine Datenübertragungsverbindung (125) verbundenen Server (140) aufweist, wobei die Benutzersitzung als Mitteilungen wenigstens eine Anforderung (134) und eine Antwort (132) zwischen dem Client (110) und dem Server (140) umfaßt, **dadurch gekennzeichnet, daß** das System umfaßt:
einen Ablaufkontrolldaten-Erfassungsfilter (150), der die Datenübertragungsverbindung (125) überwacht, um eine Anforderung (134) von dem Client (110) an den Server (140) und eine Antwort (132) von dem Server (140) an den Client (110) auf die Anforderung des Client (110) zu empfangen;
ein Ablaufkontroll-Verschlüsselungsmodul (1410), das die empfangene Anforderung (134) und die empfangene Antwort (132) mittels eines von ihm in Abhängigkeit von dem Client (110) und der Anforderung erzeugten Verschlüsselungs-Schlüssels verschlüsselt, den Verschlüsselungs-Schlüssel in zwei oder mehr Teile aufteilt und einen ersten Teil des Verschlüsselungs-Schlüssels an den Client (110) und einen zweiten Teil des Verschlüsselungs-Schlüssels an den Server (140) übermittelt;
einen Ablaufkontrollspeicher (160), der die verschlüsselten Mitteilungen der Benutzersitzung (130) speichert,
ein Ablaufkontroll-Entschlüsselungsmodul (1510), das die Teile des Verschlüsselungs-Schlüssels von dem Client (110) und dem Server (140) abholt, um ihn wiederherzustellen, und den Verschlüsselungs-Schlüssel als Entschlüsselungs-Schlüssel verwendet, um die verschlüsselt gespeicherten Mitteilungen zu entschlüsseln.

17. System nach Anspruch 16, **dadurch gekennzeichnet, daß** der Ablaufkontrolldaten-Erfassungsfilter (150) mit der Anforderung (134) von dem Client (110) auch zu der Computer-Umgebung gehörende Umgebungsdaten speichert.

18. System nach Anspruch 16 oder 17, **dadurch gekennzeichnet, daß** der Ablaufkontrolldaten-Erfassungsfilter (150) mit der Antwort auf die Anforderung (134) des Client (110) an den Client (110) auch zu der Computer-Umgebung gehörende Umgebungsdaten speichert.

19. System nach einem der Ansprüche 16 bis 18, **dadurch gekennzeichnet, daß** der Ablaufkontrolldaten-Erfassungsfilter (150) verifiziert, daß die verschlüsselte Benutzersitzung (130) nicht gefälscht worden ist.

20. System nach einem der Ansprüche 16 bis 19, **dadurch gekennzeichnet, daß** die Computer-Umgebung mehrere Clients (110) aufweist, wobei die Benutzersitzung als Mitteilungen, Anforderungen und Antworten zwischen den Clients (110) und dem Server (140) umfaßt und das Ablaufkohtroll-Verschlüsselungsmodul (1410) den Verschlüsselungs-Schlüssel in so viele Teile aufteilt, wie es Teilnehmer der Benutzersitzung (130) einschließlich des Servers (140) gibt, und an jeden Teilnehmer ein Teil des Verschlüsselungs-Schlüssels liefert.

21. System nach Anspruch 20, **dadurch gekennzeichnet; daß** der Ablaufkontrolldaten-Erfassungsfilter (150) jeden Client (110) und den Server (140) mit Identifikationsinformation versieht, um die Clients (110) und den Server (140) zu lokalisieren.

22. System nach einem der Ansprüche 20 bis 21, **dadurch gekennzeichnet, daß** der Ablaufkontrolldaten-Erfassungsfilter (150) verifiziert, daß die verschlüsselte Benutzersitzung (130) nicht gefälscht worden ist.

23. System nach einem der Ansprüche 20 bis 22, ferner umfassend ein Ablaufkontroll-Entschlüsselungsmodul (1520), das die verschiedenen Teile des Verschlüsselungs-Schlüssels von den Clients (110) und dem Server (140) abholt, auf Basis der Verschlüsselungs-Schlüssel der Clients (110) und des Servers (140) die verschlüsselten Mitteilungen der Benutzersitzung (130) entschlüsselt und die Mitteilungen der Benutzersitzung (130) in dem Server (140) wiederherstellt.

## Claims

1. Method for storing communications during a user session (130), in particular for verifying an event during a user session (130), in a computer environment including a client (110) and a server (140) connected to the client (110) via a data transmission connection (125), the user session comprising as communication at least a request (134) and a response (132) between the client (110) and the server (140), and the method comprising the step of:
receiving a request (134) from the client (110) at the server (140);
**characterized in that**
the data transmission connection (125) is monitored by an auditor capture filter (150) to receive the request (134) and the response (132),
after receipt the request (134) and the response (132) are transmitted by the auditor capture filter (150) to an auditor encryption module (1410) which encrypts the request (134) and the response (132) by means of an encryption key generated by it and stores the request (134) and the response (132) in an auditor storage (160),
the encryption key is generated relative to the client (110) and the request,
the encryption key is divided into two or more portions by the auditor encryption module,
a first portion of the encryption key is transmitted to the client (110) and a second portion of the encryption key is transmitted to the server (140),
the portions of the encryption key are collected from the client (110) and the server (140) and combined by an auditor decryption key (1510) to recover the encryption key, and
the encryption key is used as decryption key to decrypt the stored encrypted communications.

2. Method according to claim 1, **characterized in that** in addition to the request (134) of the client (110) the computer environmental data are stored in the auditor storage (160).

3. Method according to claim 1 or claim 2, **characterized in that** in addition to the response to the request (134) the computer environmental data are stored in the auditor storage (160).

4. Method according to any one of the preceding claims, **characterized in that** it is verified that the user session (130) was not falsified.

5. Method according to any one of the preceding claims, **characterized in that** the communications on the server (140) are recovered.

6. Method according to any one of the preceding claims, **characterized in that** the environment of the computer includes a plurality of clients (110), wherein the user session comprises requests and responses between the clients (110) and the server (140) as communications, the encryption key is divided in as many portions as there are participants in the user session (130) including the server (140) and a portion of the encryption key is delivered to each participant.

7. Method according to claim 6, **characterized in that** each client (110) and the server (140) are provided with identification information to localize the clients (110) and the server (140).

8. Method according to claim 6, **characterized in that** the communications of the user session (130) are decrypted by means of the portions of the encryption key coming from the clients (110) and the portion of the encryption key coming from the server (140) and **in that** the communications are recovered.

9. Method according to any one of the preceding claims, **characterized in that** the step of encrypting the response with the encryption key is performed by a third party (1420).

10. Method according to any one of the preceding claims, **characterized in that** the steps of encrypting the request with an encryption key, decrypting the encrypted request and, if necessary, the steps of encrypting the response, storing the request and storing the response are performed by a third party (1420).

11. Method according to claim 10, further comprising the steps of
providing, by the third party (1420), a first portion of the encryption key to the client (110);
providing, by the third party (1420), a second portion of the encryption key to the server (140);
collecting, by the third party (1420), at least the first portion or the second portion;
recovering, by the third party (1420), the encryption key using at least the collected portion.

12. Method according to claim 10 or claim 11, wherein the first portion of the encryption key and the second portion of the encryption key are stored at the third party (1420).

13. Method according to any one of claims 10 to 12, wherein the step of recovering the encryption key comprises the following steps:
collecting the portion of the encryption key transmitted to the client (110);
collecting the second portion of the encryption key from the server (140); and
determining the encryption key from the portion of the encryption key collected from the client (110) and from the second portion of the encryption key collected from the server (140).

14. Method according to claim 13, wherein, in the step of determining the encryption key, the server (140) computes the encryption key from the portion collected from the client (110) and from the second portion of the encryption key.

15. Method according to claim 13, wherein, in the step of determining the encryption key, the portion of the encryption key collected from the client (110) is appended to the second portion of the encryption key collected from the server (140) to reform the encryption key from both portions.

16. System for storing communications during a user session (130), in particular for verifying an event during a user session (130), in a computer environment including a client (110) and a server (140) connected to the client (110) via a data transmission connection (125), the user session comprising as communications at least a request (134) and a response (132) between the client (110) and the server (140), **characterized in that** the system comprises:
an auditor capture filter (150) which monitors the data transmission connection (125) to receive a request (134) from the client (110) to the server (140) and to receive a response (132) from the server (140) to the client (110) upon request of the client (110);
an auditor encryption module (1410) which encrypts the received request (134) and the received response (132) by means of an encryption key generated by it relative to the client (110) and the request, divides the encryption key into two or more portions and
transmits a first portion of the encryption key to the client (110) and a second portion of the encryption key to the server (140);
an auditor storage (160) which stores the encrypted communications of the user session (130); and
an auditor decryption key (1510) which collects the portions of the encryption key from the client (110) and the server (140) to recover the encryption key, and which uses the encryption key as decryption key to decrypt the stored encrypted communications.

17. System according to claim 16, **characterized in that** the auditor capture filter (150) stores computer environmental data in addition to the request (134) of the client (110).

18. System according to claim 16 or claim 17, **characterized in that** the auditor capture filter (150) stores computer environmental data in addition to the response to the request (134) of the client (110) to the client (110).

19. System according to any one of claims 16 to 18, **characterized in that** the auditor capture filter (150) verifies that the encrypted user session (130) was not falsified.

20. System according to any one of claims 16 to 19, **characterized in that** the environment of the computer includes a plurality of clients (110), wherein the user session comprises requests and responses between the clients (110) and the server (140) as communications, and wherein the auditor encryption module (1410) divides the encryption key in as many portions as there are participants in the user session (130) including the server (140) and delivers a portion of the encryption key to each participant.

21. System according to claim 20, **characterized in that** the auditor capture filter (150) provides each client (110) and the server (140) with identification information to localize the clients (110) and the server (140).

22. System according to claim 20 or claim 21, **characterized in that** the auditor capture filter (150) verifies that the encrypted user session (130) was not falsified.

23. System according to any one of claims 20 to 22, further comprising an auditor decryption module (1520) which collects the different portions of the encryption key from the client (110) and the server (140), decrypts the encrypted communications of the user session (130) on the basis of the decryption key of the clients (110) and the server (140) and recovers the communications of the user session (130) at the server (140).

## Revendications

1. Procédé de mémorisation de communications pendant une session utilisateur (130), en particulier pour vérifier un événement ayant lieu pendant la session utilisateur (130), dans un environnement informatique qui présente un client (110) et un serveur (140) relié à ce dernier par une liaison de transmission de données (125), la session utilisateur comportant en tant que communication au moins une demande (134) et une réponse (132) entre le client (110) et le serveur (140) et le procédé comprenant l'étape suivante :
réception d'une demande (134) du client (110) dans le serveur (140) ;
**caractérisé en ce que**
la liaison de transmission de données (125) est contrôlée par un filtre de saisie de données de contrôle de déroulement (150) pour recevoir la demande (134) et la réponse (132),
la demande (134) et la réponse (132) sont transmises par le filtre de saisie de données de contrôle de déroulement (150), après réception, à un module de codage de contrôle de déroulement (1410), par lequel la demande (134) et la réponse (132) sont codées par une clef de codage produite par ce dernier et mémorisées dans une mémoire de contrôle de déroulement (160),
la clef de codage est produite en fonction du client (110) et de la demande,
la clef de codage est partagée par le module de codage de contrôle de déroulement en deux parties ou plus,
une première partie de la clef de codage est transmise au client (110) et une seconde partie de la clef de codage est transmise au serveur (140),
les parties de la clef de codage du client (110) et du serveur (140) sont collectées et combinées par un module de décodage de contrôle de déroulement (1510) pour reconstituer la clef de codage, et
la clef de codage est utilisée en tant que clef de décodage pour décoder les communications mémorisées codées.

2. Procédé suivant la revendication 1, **caractérisé en ce que** des données d'environnement faisant partie de l'environnement informatique sont également mémorisées dans la mémoire de contrôle de déroulement (160) avec la demande (134) du client (110).

3. Procédé suivant l'une des revendications 1 et 2, **caractérisé en ce que** des données d'environnement faisant partie de l'environnement informatique sont également mémorisées dans la mémoire de contrôle de déroulement (160) avec la réponse à la demande (134).

4. Procédé suivant l'une des revendications précédentes, **caractérisé en ce qu'**il est vérifié que la session utilisateur (130) n'a pas été falsifiée.

5. Procédé suivant l'une des revendications précédentes, **caractérisé en ce que** les communications sont reconstituées sur le serveur (140).

6. Procédé suivant l'une des revendications précédentes, **caractérisé en ce que** l'environnement informatique présente plusieurs clients (110), la session utilisateur comportant en tant que communications des demandes et réponses entre les clients (110) et le serveur (140) et la clef de codage étant scindée en un nombre de parties égal à celui des utilisateurs de la session (130) y compris le serveur (140), et une partie de la clef de codage étant fournie à chaque utilisateur.

7. Procédé suivant la revendication 6, **caractérisé en ce que** chaque client (110) et le serveur (140) sont munis d'une information d'identification pour localiser les clients (110) et le serveur (140).

8. Procédé suivant la revendication 6, **caractérisé en ce que** les communications de la session utilisateur (130) sont décodées en utilisant les parties de la clef de codage provenant des clients (110) et la partie de la clef de codage provenant du serveur (140), et que les communications sont reconstituées.

9. Procédé suivant l'une des revendications précédentes, **caractérisé en ce que** l'étape de codage de la réponse par la clef de codage est exécutée par un troisième participant (1420).

10. Procédé suivant l'une des revendications précédentes, dans lequel les étapes de codage de la demande par une clef de codage, de décodage de la demande codée et, s'il y a lieu, les étapes de codage de la réponse, de mémorisation de la demande et de mémorisation de la réponse sont exécutées par un troisième participant (1420).

11. Procédé suivant la revendication 10 comprenant les étapes supplémentaires suivantes :
transmission d'une première partie de la clef de codage au client (110) par le troisième participant (1420) ;
transmission d'une seconde partie de la clef de codage au serveur (140) par le troisième participant (1420) ;
collecte d'au moins la première partie ou de la seconde partie par le troisième participant (1420) ;
reconstitution de la clef de codage par le troisième participant (1420) ; en utilisant au moins la partie collectée.

12. Procédé suivant l'une des revendications 10 et 11, dans lequel la première partie de la clef de codage et la seconde partie de la clef de codage sont mémorisées auprès du troisième participant (1420).

13. Procédé suivant l'une des revendications 10 à 12, dans lequel l'étape de reconstitution de la clef de codage inclut les étapes suivantes :
collecte de la partie de la clef de codage transmise au client (110) ;
collecte de la seconde partie de la clef de codage du serveur (140) ; et
détermination de la clef de codage à partir de la partie de la clef de codage collectée du client (110) et de la seconde partie de la clef de codage du serveur (140).

14. Procédé suivant la revendication 13 dans lequel, dans l'étape de détermination de la clef de codage, la clef de codage est calculée à partir de la partie collectée du client (110) et de la seconde partie de la clef de codage du serveur (140).

15. Procédé suivant la revendication 13 dans lequel, dans l'étape de détermination de la clef de codage, la partie de la clef de codage collectée du client (110) est attachée à la seconde partie de la clef de codage du serveur (140) pour reformer la clef de codage à partir des deux parties.

16. Système de mémorisation de communications pendant une session utilisateur (130), en particulier pour vérifier un événement ayant lieu pendant la session utilisateur (130), dans un environnement informatique qui présente un client (110) et un serveur (140) relié à ce dernier par une liaison de transmission de données (125), la session utilisateur comportant en tant que communications au moins une demande (134) et une réponse (132) entre le client (110) et le serveur (140), **caractérisé en ce que** le système comprend :
un filtre de saisie de données de contrôle de déroulement (150), qui contrôle la liaison de transmission de données (125) pour recevoir une demande (134) du client (110) au serveur (140) et une réponse (132) du serveur (140) au client (110) sur la demande du client (110) ;
un module de codage de contrôle de déroulement (1410), qui code la demande reçue (134) et la réponse reçue (132) au moyen d'une clef de codage produite par ce dernier en fonction du client (110) et de la demande, partage la clef de codage en deux parties ou plus et transmet une première partie de la clef de codage au client (110) et une seconde partie de la clef de codage au serveur (140);
une mémoire de contrôle de déroulement (160), qui mémorise les communications codées de la session utilisateur (130),
un module de décodage de contrôle de déroulement (1510), qui collecte les parties de la clef de codage du client (110) et du serveur (140) pour la reconstituer, et utilise la clef de codage en tant que clef de décodage pour décoder les communications mémorisées codées.

17. Système suivant la revendication 16, **caractérisé en ce que** le filtre de saisie de données de contrôle de déroulement (150) mémorise également des données d'environnement faisant partie de l'environnement informatique avec la demande (134) du client (110).

18. Système suivant l'une des revendications 16 et 17, **caractérisé en ce que** le filtre de saisie de données de contrôle de déroulement (150) mémorise également des données d'environnement faisant partie de l'environnement informatique avec la réponse à la demande (134) du client (110) au serveur (140).

19. Système suivant l'une des revendications 16 à 18, **caractérisé en ce que** le filtre de saisie de données de contrôle de déroulement (150) vérifie que la session utilisateur codée (130) n'a pas été falsifiée.

20. Système suivant l'une des revendications 16 à 19, **caractérisé en ce que** l'environnement informatique présente plusieurs clients (110), la session utilisateur comportant en tant que communications des demandes et réponses entre les clients (110) et le serveur (140) et le module de codage de contrôle de déroulement (1410) partageant la clef de codage en un nombre de parties égal à celui des utilisateurs de la session (130) y compris le serveur (140), et fournissant une partie de la clef de codage à chaque utilisateur.

21. Système suivant la revendication 20, **caractérisé en ce que** le filtre de saisie de données de contrôle de déroulement (150) munit chaque client (110) et le serveur (140) d'une information d'identification pour localiser les clients (110) et le serveur (140).

22. Système suivant l'une des revendications 20 à 21, **caractérisé en ce que** le filtre de saisie de données de contrôle de déroulement (150) vérifie que la session utilisateur codée (130) n'a pas été falsifiée.

23. Système suivant l'une des revendications 20 à 22, comprenant en outre un module de décodage de contrôle de déroulement (1520), qui collecte les différentes parties de la clef de codage des clients (110) et du serveur (140), décode les communications codées de la session utilisateur (130) sur la base des clefs de codage des clients (110) et du serveur (140) et reconstitue les communications de la session utilisateur (130) dans le serveur (140).
